(19) **Europäisches Patentamt**

**European Patent Office**

**Office européen des brevets**

(11) **EP 3 926 889 A1**

(12) **EUROPEAN PATENT APPLICATION**

(43) Date of publication:
**22.12.2021 Bulletin 2021/51**

(51) Int Cl.:
**H04L 9/30** $^{(2006.01)}$

(21) Application number: **20180991.0**

(22) Date of filing: **19.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventor: **LARMUSEAU, Adriaan Joris H.**
**5656 AE Eindhoven (NL)**

(74) Representative: **Philips Intellectual Property & Standards**
**High Tech Campus 52**
**5656 AG Eindhoven (NL)**

(54) **A CRYPTOGRAPHIC CLOSENESS PROOF BETWEEN VECTORS**

(57) Some embodiments are directed to a cryptographic closeness proving system (100) comprising data providing device(s), a cryptographic proving device, and a cryptographic verification device. The data providing devices determine committed representations of input vectors. A committed representation comprises a homomorphic commitment to an inner product of the vector with itself. The cryptographic proving device constructs a cryptographic closeness proof between two vectors committed to in respective committed representations. The cryptographic closeness proof contains a homomorphic commitment to an inner product of the first and second vectors; a cryptographic inner-product proof proving of its correctness; and a cryptographic range proof that a distance commitment commits to a value in a given range. The distance commitment commits to a squared Euclidean distance between the first and second vectors and can be determined homomorphically by the cryptographic verification device based on the inner-product commitments.

Fig. 2

**Description**

FIELD OF THE INVENTION

The invention relates to a cryptographic closeness proving system comprising one or more data providing devices; a cryptographic proving device; and a cryptographic verification device. The invention further relates to a data providing device, a cryptographic proving device, and a cryptographic verification device for use in such a system. The invention further relates to a data providing method, a cryptographic proving method, and a cryptographic verification method corresponding to the respective devices. The invention also relates to a computer readable storage medium.

BACKGROUND OF THE INVENTION

Machine learning is performed more and more in distributed settings, e.g., where one party provides data for a machine learning algorithm to be performed by a second party, with results to be provided to a third party. In distributed systems, e.g., based on distributed ledgers such as blockchains, these parties may not know each other and/or may not be bound to each other by contractual agreements, making it important to provide technical means of achieving various security goals, such as confidentiality, integrity, and authenticity.

Specifically, as machine-learning becomes more ubiquitous, so do the privacy concerns it raises. Various cryptographic techniques have been developed that can help address these privacy concerns by enabling privacy preserving machine learning computations. One such technique is multi-party computation, by which different parties can perform ajoint computation without having to share their respective inputs, e.g., by performing computation on garbled inputs by means of a special purpose circuit. A second technique is homomorphic computation, where computations are performed on the encrypted data and the result is obtained after decryption. A third technique are cryptographic proofs. Cryptographic proofs include (zero-knowledge) proof of knowledge and (zero-knowledge) arguments of knowledge. A cryptographic proof, e.g., a zero-knowledge proof, can allow a prover to prove to a verifier that a certain computation was carried out correctly; a zero-knowledge proof does not leak any other information. The result of the computation can be sent instead of performing the computation directly on encrypted data.

Cryptographic proofs may be performed with respect to cryptographic commitments. As used herein, a commitment refers to a representation of one or more input values determined by a function, called the commitment function. In addition to the one or more input values, the commitment function may also take as input one or more random values. A party can commit to the input values by evaluating the commitment function and sharing the resulting commitment. The party can open the commitment by sharing the inputs to the commitment function, e.g., the input values and the random values, if using.

The commitment function is generally chosen so that it is infeasible (e.g., impossible, or taking up an unrealistically large amount of computational resources) for a party to open a commitment with a different set of values than those originally committed to. This is known as the "binding" property of the commitment. The commitment function preferably also satisfies the "hiding" property, meaning that the commitment itself reveals little or no information about the values that are being committed to. Although the use of commitments that have a high degree of hiding is preferred for confidentiality reasons, also commitments with little hiding, e.g., a commitment function that does not take a random value as input, are possible.

For various types of commitments, cryptographic proof systems are known that make it possible to prove statements about values committed to in respective commitments, without needing to open them. Such proof systems are in many cases especially constructed to allow efficient proofs for certain types of commitments. Various commitment schemes are also known in which commitments are "homomorphic". This means that applying mathematical operations to commitments, leads to a corresponding mathematical operation on the value(s) committed to. For example, a commitment to a sum of two committed elements may be computed by applying a corresponding operation, e.g., group multiplication, to the two commitments.

One important building block in cryptographic proofs, is a proof that two vectors are sufficiently close to each other with respect to a distance metric, e.g., Euclidean distance. One way of carrying out such a proof was proposed, in the context of biometrics, in the paper "Privacy-preserving similarity evaluation and application to remote biometrics authentication" by H. Kikuchi et al., Soft Computing (2010) 14:529-536 (incorporated herein by reference). A protocol "Private-Euclid" is proposed in which a first party registers to a second party by providing commitments to respective features of the biometric data, as well as commitments to squares of the respective features. When the first part later wants to authenticate, the party provides commitments to features of a new reading of the biometric data; to squares of these features; and to products of these features with the corresponding features of the original reading. The commitment scheme used is the Fujisaki-Okamoto commitment, that allows to prove that committed values are products or lie in a given range. This commitment is homomorphic. The second party uses the homomorphism to compute, from the commitments, a commitment to the squared Euclidean distance between the original reading and the new reading; and the first party uses a zero-knowledge proof to prove that this committed squared Euclidean distance lies within a given interval. The second party authenticates the first party if the new reading is close enough to the original reading.

SUMMARY OF THE INVENTION

Unfortunately, existing ways of proving closeness between vectors suffer from a number of disadvantages. Kikuchi describes a system in which one party registers a biometric reading and then later proves that a new biometric reading is close. It would be desirable to prove closeness between vectors, where both vectors can be committed to earlier or at least separately. It would also be desirable to improve the existing techniques in terms of performance and/or storage requirements. In the system of Kikuchi, for example, transmitting and storing the commitment to the original reading of the biometric data is inefficient, in particular, linear in the length of the biometric reading, and also verifying its correctness takes time that is linear in the length of the biometric reading. Also the commitment to the new reading and the proof of its correctness are linear in terms of storage, proving time, and verification time.

In order to address these and other problems, a cryptographic closeness proving system is proposed, as defined by the claims. Also, a cryptographic proving device, a data providing device, and a cryptographic verification device are proposed, as defined by the claims. Each of the devices has specific features contributing to the various advantages described herein.

The data providing device may determine a committed representation of an input vector for use in a cryptographic closeness proof. To determine the committed representation, the data providing device may determine at least one commitment to the input vector. The data providing device may further determine a homomorphic commitment to an inner product of the input vector with itself, and a cryptographic inner-product proof that said commitment commits to an inner product of the input vector with itself.

The cryptographic inner-product proof may be a zero-knowledge proof, and/or the commitment to the input vector and the commitment to the inner product may be hiding commitments, so that these components of the committed representation of the input vector do not leak information about the data committed to, thus protecting sensitive information.

Interestingly, these measures lead to a relatively small committed representation of the input vector, on which moreover efficient closeness proofs can be carried out. By committing to the inner product, it is avoided to commit to squares of individual elements of the input vector. Still, enough information is available for closeness proving. The size of the inner product commitment does not depend on the length of the input vector. This reduces the size of the committed representation and also reduces the effort, e.g., by a cryptographic verification device, to verify cryptographic closeness proofs based on it, e.g., the verifier does not need to combine individual commitments to squares, as also discussed later. Similarly, it becomes more efficient to construct a cryptographic closeness proof since the closeness proof does not need to deal with individual commitments to squares.

When committing to the input vector, it is possible to use separate commitments to its elements, e.g., using Fujisaki-Okamoto. Preferably however, a commitment scheme is used in which a commitment to a vector is sublinear in, or even independent of, the length of the vector (e.g., a constant-size commitment). Examples include generalized Pedersen commitments and its variants. In this specification, a generalized Pedersen commitment is a commitment comprising a product of respective base elements (usually group elements, in particular, generators) exponentiated by the respective values. A blinding factor comprising a further base element (usually a group element) exponentiated by a random value may be included. For security reasons, given a base element exponentiated by a large value, it is typically assumed to be intractable to compute the large value, e.g., the base element is a group element of a group in which the discrete logarithm assumption is assumed to hold. Logarithms of the base elements with respect to each other are also typically assumed to be unknown to committing parties.

Accordingly, the commitment to the input vector may be a sublinear-size or constant-size commitment. This decreases the size of the committed representation even more. Moreover, using a smaller commitment to the input vector and a commitment to the inner product, also allows more efficient inner-product proofs to be used, e.g., with verification time and proof size less than linear in the length of the input vector. For example, for generalized Pedersen commitments, efficient proofs are known. It is noted that when committing separately to vector elements and/or their squares, verification time for verifying correctness of a committed representation is necessarily linear in the length of the vector as well. This can thus be prevented.

The cryptographic proving device may construct a cryptographic closeness proof between a first vector and a second vector. The closeness proof may be with respect to first and second committed representations of the first and second vectors respectively, as described. Although the cryptographic proving device may determine one or both of the committed representations itself, interestingly, it is also possible that both are determined by (a single, or two different) external data providing device(s).

To construct the cryptographic closeness proof, the cryptographic proving device may determine a homomorphic commitment to an inner product of the first and second vectors, and a cryptographic inner-product proof that this commitment commits to an inner product of the first and second vectors. The cryptographic proving device may also determine a cryptographic range proof that a distance commitment commits to a value in a given range. This distance commitment may commit to a squared Euclidean distance between the first and second vectors, and may be homomorphically computable (e.g., by a verifier) based on the commitments to the inner products of the first and second vector with themselves and with each other.

The cryptographic inner-product proof and the cryptographic range proof may be zero-knowledge proofs, and/or the commitment to the inner product may be a hiding commitment, so that these components of the cryptographic closeness proof do not leak information about the data committed to, thus protecting sensitive information.

Accordingly, a cryptographic closeness proof is obtained with improvements in space, proving, and/or verification effort. Similarly to the data providing device, the cryptographic proving device avoids providing commitments to products of individual elements of the first and second vectors by instead providing a commitment to an inner product, whose size is independent from the length of the first and second vectors. It is also enabled to use more efficient inner-product proofs, e.g., with a verification time and proof size that is less than linear in the length of the input vectors. Also the computation by a verifier of the distance commitment is more efficient, since no separate commitments to products of elements of the first and/or second vector are needed, e.g., the computation effort of computing the distance commitment can be independent of the length of the vectors. This also makes it more efficient for the prover to determine the cryptographic range proof, e.g., since an opening for the distance commitment may be efficiently computed from respective inner product openings.

The cryptographic verification device may verify a cryptographic closeness proof between a first vector and a second vector, represented by respective committed representations. As alluded to above, this may comprise at least homomorphically determining a distance commitment to a squared Euclidean distance between the first and second vectors based on the commitments to the inner products of the first and second vector with themselves as comprised in the committed representations, and of the first and second vectors with each other as comprised in the closeness proof; and verifying a cryptographic range proof that the distance commitment commits to a value in a given range. The cryptographic verification device may further verify correctness of the first and/or second committed representations (although this is not needed, e.g., if the provider is trusted or the representations are known to have already been verified), comprising at least verifying correctness of inner-product proofs comprised in said respective representations.

For the cryptographic verification device, the amount of data retrieved and the amount of verification effort to be performed, are reduced. The committed representations of the input vectors are smaller at least because they do not contain individual commitments to squares, and the commitment to the vectors themselves are typically sublinear as well. This also makes it possible to more efficiently verify correctness of the committed representation, since it is sufficient to check one inner product instead of separate squares. Similarly, in the cryptographic closeness proof, it is avoided for the verifier to receive, or verify correctness of, separate commitments to products of elements of the first and second vector. In particular, the computation of the distance commitment is made more efficient since it can be computed based on inner products instead of individual products; in particular, the effort for computing the distance commitment may be independent of the length of the vectors.

Accordingly, significant efficiency improvements are obtained. The proofs and commitments can be instantiated in various ways, but in one concrete example, the number of values sent by proving and data providing devices to a cryptographic verification device can be reduced from around $10n$ in the prior art to around $6 \log(n)$ using the provided techniques. For example, if the length $n$ of the vctor is 128, only around ~57 proof elements may be sent instead of the 1280 proof elements of the prior art: a 95% improvement in space efficiency.

Optionally, the commitment to the inner product of the first and second vectors constructed by the cryptographic proving device, further commits to the first and second vectors. The inner-product proof may prove that said commitment commits to two vectors and their inner product. An efficient instantiation of an inner-product proof with respect to such a commitment (e.g., a single group element, as in a generalized Pedersen commitment) is known in the art. These proofs can be used, but are unfortunately based on non-hiding commitments, and are not zero-knowledge. Interestingly, the inventors managed to adapt this proof to the setting of hiding commitments and/or reduced leakage, as detailed in this specification. Apart from proving that the commitment commits to an inner product, the inner-product proof typically further proves that the commitment commits to the same vectors as the commitments in the first and second committed representations. Similarly, also the inner-product commitment of a committed representation of an input vector may commit to two vectors both equal to the input vector, with the inner-product proof proving that this commitment commits to two vectors and their inner product.

Optionally, the commitment to the inner product of the first and second vectors comprises representations of the first and second vectors with respect to the same sets of base elements used in the commitments of the first and second committed representations, respectively. This has the advantage that it allows to efficiently prove that the inner product commitment and the first and second vectors comprise the same values, essentially by seeing the inner product commitment as a product of a commitment to the first vector, a commitment to the second vector, and a commitment to the inner product.

Optionally, the first and second committed representations each comprise a first commitment to the respective vectors with respect to a common first set of base elements and a second commitment to the respective vectors with respect to a common second set of base elements. These common sets of base elements can for example be public parameters of the system. This way, given committed representations of two vectors, it is always possible to select a commitment to the first vector and a commitment to the second vector that are with respect to different base elements, e.g., for combining them in the inner product commitment. Still, the public parameters need only comprise two sets of base elements. When committing twice to the same vector, the data providing device may provide a proof that the first and second commitments of its committed representation, commit to the same vector.

Optionally, the first vector is based on a set of parameters of a machine learning model and the second vector is based on an input instance to this machine learning model. The cryptographic closeness proof can then be used in proving that the input instance matches the machine learning model, for example, in a nearest neighbours-based algorithm to prove that it is sufficiently close to an example included in the model, or in a kernel-based algorithm to prove that it is sufficiently close to the kernel. For example, this can be done so that the party in possession of the first vector can sell it to another party that wants to have valid inputs to the machine learning model, or as part of a larger proof that also includes the result of applying the model to the input. For example, the cryptographic closeness proof may prove that a vector represents an image (e.g., of a patient's lung) that satisfies a certain classification result (e.g., has cancer according to an image classifier for detecting lung cancer nodes).

Optionally, respective proofs by the data providing device and/or the cryptographic proving device may be non-interactive proofs, e.g., non-interactive zero-knowledge proofs. For example, the Fiat-Shamir heuristic or similar may be applied to an interactive proof to make it non-interactive. This may reduce the amount of communication needed, and/or allow data transfer when the cryptographic verification device is not online at the same time as the data proving and/or cryptographic proving devices.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all the steps of an embodiment of the method when the computer program is run on a computer. Preferably, the computer program is embodied on a computer readable medium.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings:

- Fig. 1 schematically shows an example of an embodiment of a cryptographic closeness proving system;
- Fig. 2 schematically shows an example of an embodiment of a cryptographic closeness proving system;
- Fig. 3a schematically shows an example of an embodiment of a data providing device;
- Fig. 3b schematically shows an example of an embodiment of a cryptographic proving device;
- Fig. 4a schematically shows an example of an embodiment of a data providing device;
- Fig. 4b schematically shows an example of an embodiment of a cryptographic proving device;
- Fig. 4c schematically shows an example of an embodiment of a cryptographic verification device;
- Fig. 5 schematically shows an example of an embodiment of a cryptographic closeness proving system;
- Fig. 6 schematically shows an example of an embodiment of a cryptographic proving method;
- Fig. 7 schematically shows an example of an embodiment of a data providing method;
- Fig. 8 schematically shows an example of an embodiment of a cryptographic verification method;
- Fig. 9 schematically shows a computer readable medium having a writable part comprising a computer program and/or a committed representation and/or a cryptographic closeness proof, according to an embodiment,
- Fig. 10 schematically shows a representation of a processor system according to an embodiment.

List of Reference Numerals:

| | |
|---|---|
| 100, 200, 500 | a cryptographic closeness proving system |
| 110, 210-211, 310, 410 | a data providing device |
| 112, 212, 312, 412 | a cryptographic proving device |
| 113, 213,413 | a cryptographic verification device |
| 130, 132, 133 | a memory |
| 140, 142, 143 | a processor |
| 150, 152, 153 | a network interface |
| 160 | a computer network |
| 170 | a storage |
| 180, 181 | a committed representation of a vector |
| 190 | a cryptographic closeness proof |
| | |
| 220-221, 320, 420-421 | a vector |
| 230-231, 330-333, 430-431 | a commitment to a vector |
| 240-242, 340-342, 440-442 | a commitment to an inner product |
| 250-252, 450-452 | an inner-product proof |
| 260, 360, 460 | a range proof |
| 270, 370, 470 | a distance commitment |
| 380-381 | an internal inner product proof |
| 382-386 | a correspondence proof |
| 388, 389 | a committed representation of a vector |
| 400, 404 | a randomness generation unit |
| 401 | a vector committing unit |
| 402, 405 | an inner product committing unit |
| 403, 406 | an inner product proving unit |
| 407 | a range proving unit |
| 408-410 | an inner product verifying unit |
| 411 | a distance computing unit |
| 412 | a range proof verifying unit |
| 490-492 | randomness |
| | |
| 510 | a requester |
| 520 | a smart contract |
| 530 | a storage |
| 540 | a data provider |
| 550 | required Euclidean distance |
| 551 | storage |
| 552 | response |
| 553 | proof verification |
| 554 | notification |
| 555 | payment |
| | |
| 900 | a computer readable medium |
| 910 | a writable part |
| 920 | a computer program |
| | |
| 1010 | integrated circuit(s) |
| 1020 | a processing unit |
| 1022 | a memory |
| 1024 | a dedicated integrated circuit |
| 1026 | a communication element |
| 1030 | an interconnect |
| 1040 | a processor system |

DETAILED DESCRIPTION OF THE EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described herein or recited in mutually different dependent claims.

Throughout this specification, the so-called Camenisch-Stadler notation is used to denote various proofs of knowledge; and proofs of the validity of statements. For instance,

$$PK\{(a, b, d): y = g^a h^b \wedge \tilde{y} = \breve{g}^a \breve{h}^d\}$$

denotes a zero-knowledge proof of knowledge of integers $a$, $b$ and $d$ such that $y = g^a h^b$ and $\tilde{y} = \breve{g}^a \breve{h}^d$ hold. For example, in the above example, $g$ and $h$ may be generators of a group G of prime order q. Various proofs discussed in this specification may be carried out using the Schnorr proof system known from US4995082A.

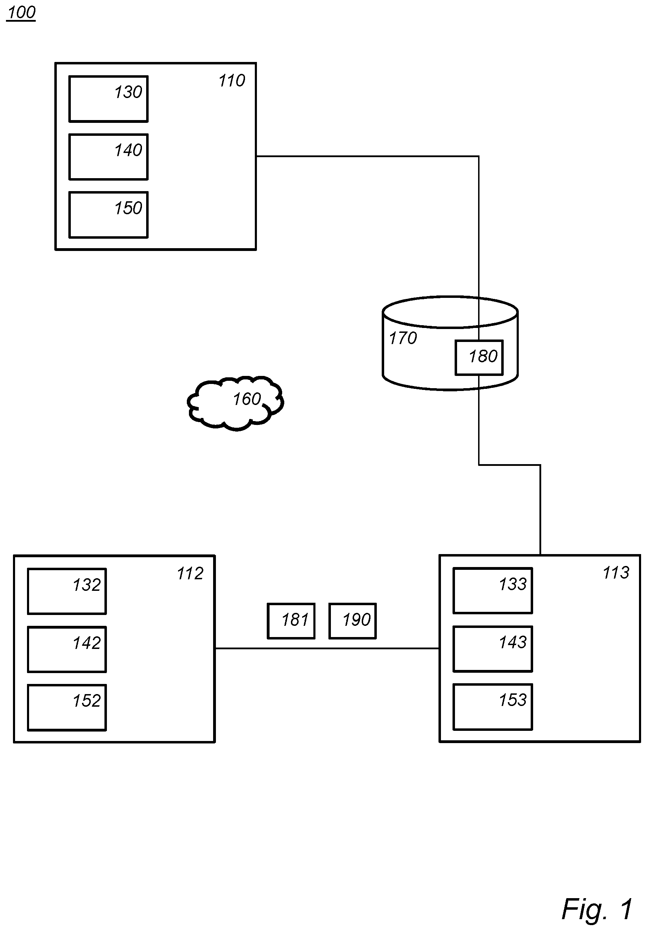

Fig. 1 schematically shows an example of an embodiment of a cryptographic closeness proving system 100. System 100 may comprise one or more data providing devices that determine respective committed representations of input vectors; a cryptographic proving device that constructs a cryptographic closeness proof with respect to committed representations; and a cryptographic verification device that verifies the cryptographic closeness proof with respect to the committed representations.

Generally, the data providing devices, cryptographic proving devices, and cryptographic verification devices can each be separate devices, but the devices can also be combined. For example, a data providing device may act as a cryptographic proving device, or as a cryptographic verification device. The cryptographic proving device itself can for example determine one or both committed representations with respect to which it determines a closeness proof. The cryptographic proving device and the cryptographic verification device however are typically different.

Shown in the figure are a data providing device 110; a cryptographic proving device 112 that also acts as a data providing device itself; and a cryptographic verification device 113.

Data providing device 110 (also known as a cryptographic data providing device) may be for determining committed representation 180 of an input vector for use in cryptographic closeness proof 190. Data providing device 110 may determine committed representation 180 and provide it to cryptographic verification device 113, e.g., by sending it, or, as shown in the figure, by storing it in a storage 170 accessible by cryptographic verification device 113, e.g., a network drive, a database, or the like. The sending may comprise performing an interactive proof comprised in the committed representation, e.g., an interactive inner product proof. Data providing device 110 may also provide commitment openings of commitments of committed representation 180 to a cryptographic proving device 112, e.g., upon request.

Data providing device 110 may comprise a processor 130 and a memory 140. Memory 140 may be used for data and/or instruction storage. For example, memory 140 may comprise software and/or data on which processor 130 is configured to act. Memory 140 may also store the input vector. Processor 130 may be implemented as one or more processor circuits, e.g. microprocessors, ASICs, FPGA and the like. Memory 140 may comprise computer program instructions which are executable by processor 130. Processor 130, possibly together with memory 140, is configured according to an embodiment of a data providing device. Device 110 may also comprise a communication interface 150 arranged to communicate with other devices, e.g., cryptographic proving device 112 and/or cryptographic verification device 113. For example, the communication interface may comprise a connector, e.g., a wired connector, e.g., an Ethernet connector, or a wireless connector, e.g., an antenna, e.g., a Wi-Fi, 4G or 5G antenna. The communication interface may also be a storage interface to an internal or external data storage, a keyboard, an application interface (API), etc.

Data providing device 110 may be configured to determine committed representation 180 of the input vector by determining at least one commitment to the input vector; a homomorphic commitment to an inner product of the input vector with itself, and a cryptographic inner-product proof that said commitment commits to an inner product of the input vector with itself. The committed representation 180 may comprise the at least one commitment to the input vector, the homomorphic commitment to the inner product, and the cryptographic inner-product proof

Cryptographic proving device 112 may be for constructing a cryptographic closeness proof 190 between a first vector and a second vector. Cryptographic closeness proof 190 may be with respect to committed representations 180, 181 of the first and second vector. Cryptographic proving device 112 may be also act as a data cryptographic proving device, in which case cryptographic proving device 113 may itself construct a committed representation 181. Cryptographic proving device 112 may provide the proof 190 and optionally the representation 181 to the cryptographic verification device, e.g., by sending the data (as show in the figure), or by storing it in a storage, e.g., storage 170. The sending may comprise performing interactive proof(s) comprised in representation 181 and/or proof 190. The proofs of representation 181 and/or proof 190 may at least partially overlap, e.g., be based on the same challenge, be proven in a combined proof, etc.

Cryptographic proving device 112 may comprise a processor 132 and a memory 142. Memory 142 may be used for data and/or instruction storage. For example, memory 142 may comprise software and/or data on which processor 132 is configured to act. Memory 142 may also store openings of the commitments to the first and second vectors and of the commitments to the inner products of the first and second vectors with themselves, e.g., obtained from a data providing device 110 or generated by the device itself. Processor 132 may be implemented as one or more processor circuits, e.g. microprocessors, ASICs, FPGA and the like. Memory 142 may comprise computer program instructions which are executable by processor 132. Processor 132, possibly together with memory 142, is configured according to an embodiment of a cryptographic proving device. Device 112 may also comprise a communication interface 152 arranged to communicate with other devices, e.g., data providing device 110 and/or cryptographic verification device 113. For example, the communication interface may comprise a connector, e.g., a wired connector, e.g., an Ethernet connector, or a wireless connector, e.g., an antenna, e.g., a Wi-Fi, 4G or 5G antenna. The communication interface may also be a storage interface to an internal or external data storage, a keyboard, an application interface (API), etc.

Cryptographic proving device 112 may be configured to configured to construct the cryptographic closeness proof 190. To this end, cryptographic proving device 112 may determine a homomorphic commitment to an inner product of the first and second vectors, and a cryptographic inner-product proof that said commitment commits to an inner product of the first and second vectors. Cryptographic proving device 112 may also determine a cryptographic range proof that a distance commitment commits to a value in a given range, the distance commitment committing to a squared Euclidean distance between the first and second vectors, the distance commitment being homomorphically computable based on the commitments to the inner products of the first and second vector with themselves and with each other. The cryptographic closeness proof 190 may comprise the homomorphic commitment to the inner product, the cryptographic inner-product proof, and the cryptographic range proof. Cryptographic proving device 112 can optionally also construct committed representation 181.

Cryptographic verification device 113 may be for verifying cryptographic closeness proof 190. Cryptographic verification device 113 may comprise a processor 133 and a memory 143. Memory 143 may be used for data and/or instruction storage. For example, memory 143 may comprise software and/or data on which processor 133 is configured to act. Memory 143 may also store first and second committed representations 180, 181 of the first and second vectors respectively, and cryptographic closeness proof 190. Processor 133 may be implemented as one or more processor circuits, e.g. microprocessors, ASICs, FPGA and the like. Memory 143 may comprise computer program instructions which are executable by processor 133. Processor 133, possibly together with memory 143, is configured according to an embodiment of a cryptographic verification device. Device 113 may also comprise a communication interface 153 arranged to communicate with other devices, e.g., data providing device 110 and/or cryptographic proving device 112. For example, the communication interface may comprise a connector, e.g., a wired connector, e.g., an Ethernet connector, or a wireless connector, e.g., an antenna, e.g., a Wi-Fi, 4G or 5G antenna. The communication interface may also be a storage interface to an internal or external data storage, a keyboard, an application interface (API), etc.

Cryptographic verification device 113 may be configured to verify correctness of the cryptographic closeness proof 190 with respect to the first and second committed representations 180, 181. The verification may comprise at least homomorphically determining a distance commitment to a squared Euclidean distance between the first and second vectors based on the commitments to the inner products of the first and second vector with themselves and of the first and second vectors with each other, and verifying a cryptographic range proof that the distance commitment commits to a value in a given range.

The various devices of system 100 may communicate with each other over a computer network 160. The computer network may be an internet, an intranet, a LAN, a WLAN, etc. Computer network 160 may be the Internet. The computer network may be wholly or partly wired, and/or wholly or partly wireless. For example, the computer network may comprise Ethernet connections. For example, the computer network may comprise wireless connections, such as Wi-Fi, ZigBee, and the like. Computer network 160 may comprise additional elements, e.g., a router, a hub.

The various devices of Fig. 1 may have respective user interfaces, which may include well-known elements such as one or more buttons, a keyboard, display, touch screen, etc. For example, the user interface of the cryptographic verification device 113 may be arranged for accommodating user interaction for initiating a closeness verification of a vector.

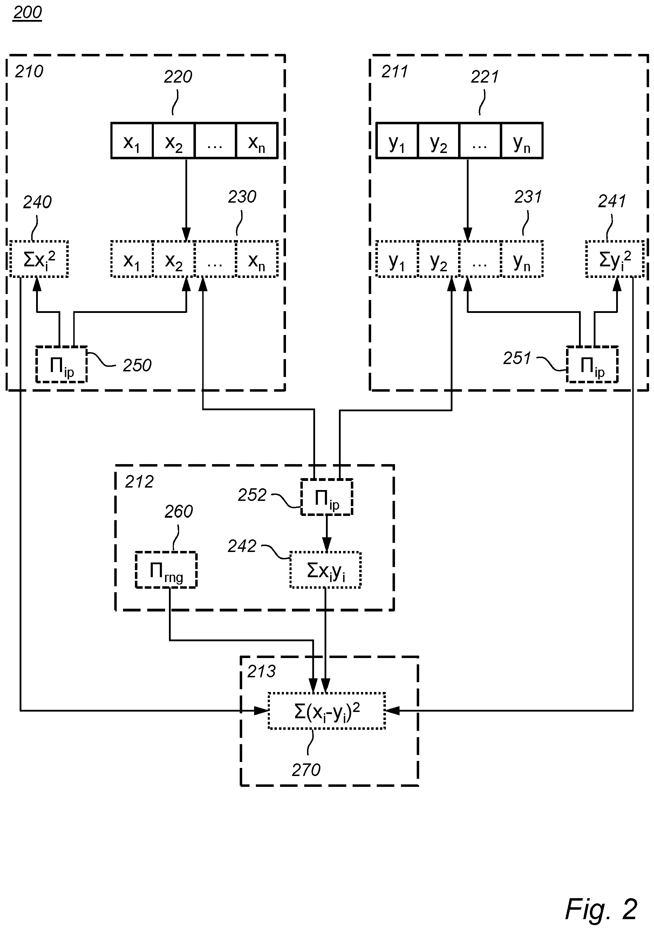

Fig. 2 schematically shows an example of an embodiment of a cryptographic closeness proving system 200. The figure shows a cryptographic proving device 212 for constructing a cryptographic closeness proof between a first vector and a second vector, e.g., based on cryptographic proving device 112 of Fig. 1. The closeness proof is with respect to first and second committed representations of the first and second vectors, respectively. In this example, the first and second committed representations are determined by respective data providing devices 210 and 211, e.g., based on data providing device 110 of Fig. 1. The cryptographic closeness proof is verified by a cryptographic verification device 213, e.g., based on cryptographic verification device 113 of Fig. 1. For the purpose of explication, Fig. 2 shows various elements that may be stored by the devices at various stages of their operation.

As also discussed with respect to Fig. 1, many variants of the above configuration are possible, e.g., data providing devices 210 and 211 may be combined into a single device, and one or more of the data providing devices 210, 211 can be combined into a single device together with cryptographic proving device 212. Cryptographic verification device 213 can also be combined with one or both data providing devices, but is typically separate from cryptographic proving device 212.

Shown in the figure is first vector 220 that is an input vector for data providing device 210. Typically, the vector is a numerical vector, e.g., its elements are integers. While represented as integers, the elements of the vector can actually represent non-integral quantities, e.g., using a fixed-point representation. A closeness proof with respect to fixed-point numbers can be performed by using a suitable range for the squared Euclidean distance. For compatibility with the commitment schemes and/or proof systems used, the vector elements may be stored as integers modulo a given value $N$, e.g., $N$ can be a prime number, an RSA modulus, etc. The vector comprises multiple elements; the number of elements of the vector can be, e.g., at most or at least 10, at most or at least 100, or at most or at least 1000.

As shown in the figure, data providing device 210 may determine at least one commitment 230 to its input vector 220. Dotted lines are used in the figure to denote commitments. Generally, any commitment scheme that is suitable for committing to first vector 230 can be used, as long as it is compatible with the proof system used to construct inner product proofs 250 and 252, as discussed later. Although it is possible to commit to a vector using separate commitments to the separate values, it is preferred to use a vector commitment that can commit to a vector in space that is sublinear in the length of the vector, preferably constant. Committing to an input vector 220 can optionally comprise proving that the values being committed to lie in a given range, e.g., can be represented as integers with a given bitlength. This may prevent overflows in the computation of the squared Euclidean distance. Known techniques can be used.

A preferred option for commitment 230 and the other commitments used in system 200, e.g., commitments 231 and 240-242, is the generalized Pedersen commitment scheme, in which a commitment to multiple respective values comprises a product of respective base group elements exponentiated by the respective values. The base group elements are typically generators of a group in which the discrete logarithm problem is assumed to be intractable. The discrete logarithms of the base group elements with respect to each other are also assumed to be unknown, at least to the parties determining the commitments (e.g., the cryptographic proving devices and the data providing devices). For example, they can be generated by a trusted third party or in a verifiable way using a "nothing up my sleeve" method.

Interestingly, the generalized Pedersen scheme leads to a constant-size commitment regardless of the length of the vector being committed to. The commitments can also comprise a blinding factor, e.g., a further base group element exponentiated with a random value. Many efficient proof techniques are available for such commitments. As a practical example, generalized Pedersen commitments can be used based on elliptic curve cryptography, e.g., by using the secp256r1 curve to implement the group used to represent the commitments in.

Data providing device 210 may further determine a homomorphic commitment 240 to the inner product of input vector 220 with itself. Any commitment compatible with the proof systems for inner product proof 250 and range proof 260, as discussed later, can be used. It is preferred to use the same commitment scheme as for commitment 230. The same commitment scheme is typically used at least for homomorphic commitments 240-242 so that they can be homomorphically combined.

Data providing device 210 may further determine a cryptographic inner-product proof 250 that commitment 240 commits to an inner product of the input vector 220 with itself. This proof is optional, e.g., in case the verifier trusts the data providing device, it is not needed. Inner-product proof 250 is further discussed below.

Analogously to data cryptographic proving device 210, also data providing device 211 may determining a committed representation of an input vector 221 for use in a cryptographic closeness proof. To this end, device 211 may determining at least one commitment 231 to the input vector; a homomorphic commitment 241 to an inner product of the input vector with itself; and optionally a cryptographic inner-product proof 251 that commitment 241 commits to an inner product of the input vector 221 with itself. The second vector 221 typically has the same length as the first vector 220, e.g., first vector 220 and/or second vector 221 may be extended by padding with zeros.

Cryptographic proving device 212 may determine a homomorphic commitment 242 to an inner product of the first and second vectors 220, 221. The same considerations as for commitment 240 apply. Cryptographic proving device 212 may further determine a cryptographic inner-product proof 252 that commitment 242 commits to an inner product of the first and second vectors. Cryptographic proving device 212 may further determining a cryptographic range proof 260 that a distance commitment commits to a value in a given range.

Several concrete examples of proof systems for inner product proofs 250, 251, and 252 are now discussed. It is not needed to use the same proof system for different proofs, as long as the respective proof systems are compatible with the respective commitments they use.

In an embodiment, the proof system used for an inner product is as disclosed in "Linear Algebra with Sub-linear Zero-Knowledge Arguments" by J. Groth, Proceedings CRYPTO 2009 (incorporated herein by reference). Specifically, in this proof system, there are commitments *a, b, c,* to vectors $x, y \in \mathbb{Z}_p^n$ and scalar $z \in \mathbb{Z}_p$ respectively. The commitments are generalized Pedersen commitments, e.g., a commit to a vector $(x_1, \ldots, x_n) \in \mathbb{Z}_p^n$ may determined as

$$c = g_1^{x_1} \cdot \ldots \cdot g_n^{x_n} \cdot h^r$$ for random *r*. In this proof system, the prover wants to convince the verifier that z = $x * y$, where $*$ can be an inner product. The private input of the prover are openings ($x$, *r*), ($y$, *s*), and ($z$, *t*) of the repsective commitments *a, b,* and *c.*

Accordingly, for example, this proof system can be used in inner-product proof 250 to prove that commitment 240 commits to an inner product of the vector committed to in commitment 230 (i.e., the first vector 220) with itself. Instead or in addition, this proof system can be used in inner-product proof 251 to prove that commitment 241 commits to an inner product of the vector committed to in commitment 231 (i.e., the second vector 221) with itself. Instead or in addition, this proof system can be used in inner-product proof 252 to prove that commitment 242 commits to an inner product of the vector committed to in commitment 230 (i.e., the first vector 220) with the vector committed to in commitment 231 (i.e., the second vector 221).

While described as an interactive proof, the proof can be made non-interactive using known transformations, e.g., the Fiat-Shamir heuristic or its variants. It is also noted that, although the description of Groth assumes that commitments *a, b, c* each use the same commitment key, this is not needed, e.g., each commitment can use a different commitment key. The proof system is also applicable when commitments 230, 231, 240, 241, and/or 242 are deterministic, e.g., by setting the randomness used in the commitments to zero.

In an embodiment, the proof system used for an inner product is based on the inner product evaluation argument disclosed in "Efficient Zero-Knowledge Arguments for Arithmetic Circuits in the Discrete Log Setting" by J. Bootle et al., Proceedings EUROCRYPT 2016 (full version available at https://eprint.iacr.org/2016/263 and incorporated herein by reference). The disclosed inner product argument is a proof of knowledge of two vectors $a, b \in \mathbb{Z}_p^n$ such that *A* = $g^a$, *B* = $g^b$ and $a \cdot b$ = z, given $z \in \mathbb{Z}_p$, $A, B \in \mathbb{G}$, and $g, h \in \mathbb{G}^n$. Optionally, given length-n vectors, the disclosed proof can comprise a reduction to a reduced statement comprising that a further commitment commits to an inner product of further first and second vectors with smaller length *n/m* than the first and second vectors, where m is a value that divides *n*; and a cryptographic proof of the reduced statement.

Interestingly, the inventors managed to adapt the proof system of Bootle *et al.*, which uses a public inner product z, to the setting where *z* is committed to by a commitment *Z* = $g^z h^{r_z}$, 240-242, possibly comprising a blinding factor. Moreover, the inventors also managed to reduce leakage of the secret information *a, b,* z compared to the proof system of Bootle *et al.*, which is not zero-knowledge. Both improvements are separately applicable but their combination is especially desirable for allowing a proof with reduced leakage on hiding commitments.

In particular, the proof system may be adapted to the setting where also the vectors 230, 231 with respect to which the inner product is proven correct, comprise blinding factors. To this end, the prover keeps track of the blinding factors. Also new blinding factors may be included in intermediate results sent by the prover to the verifier, reducing leakage due to the protocol itself. To this end, the prover can keep track of the blinding factors in commitments that are sent by the prover to the verifier. To further reduce leakage, the base case of the reduction $\mu$ = 1 may be replaced by performing a proof that has reduced leakage compared to revealing the witnesses, e.g., a zero-knowledge inner product proof such as that by Groth. Interestingly, due to the recursive shrinking of the proof, fewer exponentiations are needed than, e.g., in the proof of Groth. As a detailed example, the following adaptation of the proof system of Bootle et al. can be used:

**Proof system for inner-product proofs 250-252 based on Bootle *et al.* Common input:**

$$\left(\mathbb{G}, p, g, A, h, B, Z, m_\mu = m, m_{\mu-1} = m', \ldots, m_1\right) \text{ s.t. } g, h \in \mathbb{G}^n, \ A, B \in \mathbb{G}, \ n = \prod_{i=1}^{\mu} m_i$$

**Prover's witness:** ($a_1, \ldots, a_m, r_a, b_1, \ldots, b_m, r_b, z, r_z$) satisfying

$$A = \prod_{i=1}^{m} g_i^{a_i} g_a^{r_a} \quad B = \prod_{i=1}^{m} h_i^{b_i} h_b^{r_b} \quad Z = g^z h^{r_z} \quad \sum_{i=1}^{m} a_i \cdot b_i = z$$

**Argument if $\mu = 1$, first option:**

**P $\rightarrow$ V**: Send $(a_1, ..., a_m, r_a, b_1, ... , b_m, r_b, z, r_z)$
**P $\leftarrow$ V:** Accept if and only if

$$A = \prod_{i=1}^{m} g_i^{a_i} g_0^{r_a} \quad B = \prod_{i=1}^{m} h_i^{b_i} h_0^{r_b} \quad Z = g^z h^{r_z} \quad \sum_{i=1}^{m} a_i b_i = z$$

**Argument if $\mu = 1$, alternative option**: apply other inner product proof, e.g., Groth proof system
**Reduction** if $\mu \neq 1$:
**P $\rightarrow$ V**: Send $A_{1\text{-}m}, B_{1\text{-}m}, Z_1\text{-}m, ... , A_{m\text{-}1}, B_{m\text{-}1}, Z_{m\text{-}1}$ where

$$A_k = g_a^{r_k^a} \prod_{i=\max(1,1-k)}^{\min(m,m-k)} g_i^{a_{i+k}}, B_k = h_b^{r_k^b} \prod_{i=\max(1,1-k)}^{\min(m,m-k)} h_i^{b_{i+k}}, Z_k = g^{z_k} h^{r_k^z}, z_k = \sum_{i=\max(1,1-k)}^{\min(m,m-k)} a_i b_{i+k}$$

Here, $A_0 = A$, $B_0 = B$, $Z_0 = z$ are not re-randomized and do not need to be re-submitted. **P $\leftarrow$ V**: $x \leftarrow \mathbb{Z}_p^*$ Both

prover and verifier compute a reduced statement of the form ($\mathbb{G}$, $p$, $g'$, $A'$, $h',B',Z'$, $m_{\mu\text{-}1}$, ...; $m_1$) where

$$g' = \left(g'_1, ..., g'_{m'}\right) = \prod_{i=1}^{m} g_i^{x^{-i}} \quad A' = \prod_{k=1-m}^{m-1} A_k^{x^k}$$

$$h' = \left(h'_1, ..., h'_{m'}\right) = \prod_{i=1}^{m} h_i^{x^i} \quad B' = \prod_{k=1-m}^{m-1} B_k^{x^{-k}} \quad Z' = \prod_{k=1-m}^{m-1} Z_k^{x^{-k}}$$

The prover computes a new witness as $\left(a'_1, ..., a'_{m'}\right) = \sum_{i=1}^{m} a_i x^i, r_a = \sum r_i^a x^i,$

$\left(b'_1, ..., b'_{m'}\right) = \sum_{i=1}^{m} b_i x^{-i}, \quad r_b = \sum r_i^b x^{-i}, \quad z' = \sum_{k=1-m}^{m-1} z_k x^{-k}, \quad r'_z = \sum_{k=1-m}^{m-1} r_k^z x^{-k}.$

Also shown in the figure is a distance commitment 270 committing to a squared Euclidean distance between the first and second vectors 220, 221. Interestingly, as illustrated in the figure, the distance commitment 270 can be homomorphically computed, e.g., by a cryptographic verification device, based on the commitments 240, 241 to the inner products of the first and second vector with themselves and commitment 242 to the inner product of the first and second vector with each other.

Specifically, given two vectors $\vec{x} = x_1 \cdots x_n$, $\vec{y} = y_1 \cdots y_n$, the Euclidean distance between the two vectors is defined as $\|\vec{x} - \vec{y}\| = \sqrt{\sum_{1}^{n}(x_i - y_i)^2}$. Accordingly, the squared Euclidean distance is:

$$\|\vec{x} - \vec{y}\|^2 = \sum_{1}^{n} (x_i^2 + y_i^2 - 2x_i y_i) = \sum_{1}^{n} x_i^2 + \sum_{1}^{n} y_i^2 - 2 \sum_{1}^{n} x_i y_i.$$

Given homomorphic commitments $\tilde{X}$, 240 to inner product $\sum_{1}^{n} x_i^2$ of the first vector with itself; $\tilde{Y}$, 241 to inner product $\sum_{1}^{n} y_i^2$ of the second vector with itself; and $C$ to the inner product $\sum_{1}^{n} x_i y_i$ of the first and second vectors, distance commitment 270 may be homomorphically computed. For example, writing the homomorphism of the homomorphic commitment scheme multiplicatively, distance commitment 270 may be computed as $D = \tilde{X}\tilde{Y}/C^2$.

Also shown in the figure is a cryptographic range proof 260 that distance commitment 270 commits to a value in a given range. Typically, the witness to the range proof is the opening of the distance commitment 270. Cryptographic proving device 212 may compute this opening homomorphically based on the openings of commitments 240-242. Several concrete examples of proof systems for range proof 260 are now given.

In an embodiment, the cryptographic range proof 260 is as disclosed in "Bulletproofs: Short Proofs for Confidential Transactions and More" by B. Bünz et al., Proceedings S&P 2018 (full version available at https://eprint.iacr.org/2017/1066 and incorporated herein by reference). The range proof is with respect to a Pedersen commitment $V = h^\gamma g^v$. The prover proves knowledge of value $v$ and randomness $\gamma$, where $v \in [0, 2^n - 1]$. The proof can be made non-interactive, e.g., using Fiat-Shamir or its variants. The proof can also work on deterministic commitments, e.g., by setting randomness $\gamma = 0$.

In an embodiment, the cryptographic range proof 260 is as disclosed in "Efficient protocols for set membership and range proofs" by J. Camenisch et al., Proceedings ASIACRYPT 2008 (incorporated herein by reference). This range proof is respect to Pedersen commitment $C = g^\sigma h^r$, wherein a group is used for which a cryptographic pairing is used. The prover proves knowledge of values $\sigma$ and randomness $r$, where $\sigma \in [0, u^l]$. The proof can work on deterministic commitments, e.g., by setting randomness $r = 0$.

In an embodiment, the cryptographic range proof 260 is as disclosed in "Efficient Proofs that a Committed Number Lies in an Interval" by F. Boudot, Proceedings EUROCRYPT 2000 (incorporated herein by reference). This range proof is respect to a Fujisaki-Okamoto commitment $E(x, r) = g^x h^r$ mod $n$ where the factorization of $n$ is secret. The proof allows the prover to prove that a committed number belongs to a desired interval $[a, b]$. The proof can be made non-interactive, e.g., using the Fiat-Shamir heuristic or its variants. The proof can also work on deterministic commitments, e.g., by setting randomness $r = 0$. In case the inner product commitments 240-242 use a different commitment scheme such as Pedersen commitments, first convert commitment 270 may be first committed to a Fujisaki-Okamoto commitment, and it may be proven that this conversion was performed correctly.

Range proof 260 can comprise multiple respective range proofs proving that distance commitment 270 lies in multiple respective ranges, the range proof 260 thus proving that the squared distance between the first and second vectors 220-221 lies within the intersection of the respective ranges. Such a range proof can be based on homomorphically transforming distance commitment 270 and proving that the homomorphically transformed distance commitment lies in a given range. For example, using a proof system that proves that a committed value $x$ lies in an interval $[0,7]$, it can be proven that the committed value $x$ lies in the interval $[0,5]$ by proving that the commitment itself commits to a value in $[0,7]$ and that a commitment to $5 - x$ (determined homomorphically from the commitment to $x$) lies in the interval $[0,7]$ as well.

Various alternatives to the above inner-product proofs 250-252 and range proof 260 are possible and within reach of the skilled person. For example, the proofs can be succinct zero-knowledge arguments of knowledge (SNARKs), e.g., using the proof system disclosed in "Pinocchio: Nearly Practical Verifiable Computation" by B. Parno et al., Proceedings S&P 2013 (full version available at https://eprint.iacr.org/2013/279 and incorporated herein by reference). Generally, SNARKs can allow any statement to be proven using a constant-size proof (based on key material generated by a trusted party), and accordingly, can be applied in particular for inner-product and range proofs on committed values as well.

The committed representation of the input determined by a data providing device 210 can comprise, for example, the commitment(s) 230 to its input vectors; the inner product commitment 240; and proof 250. Similarly for data providing device 211. The cryptographic closeness proof constructed by cryptographic proving device 212 can comprise, for example, the inner product commitment 242; and proof 260. The cryptographic closeness proof typically does not comprise the distance commitment since it can be computed homomorphically by the verifier.

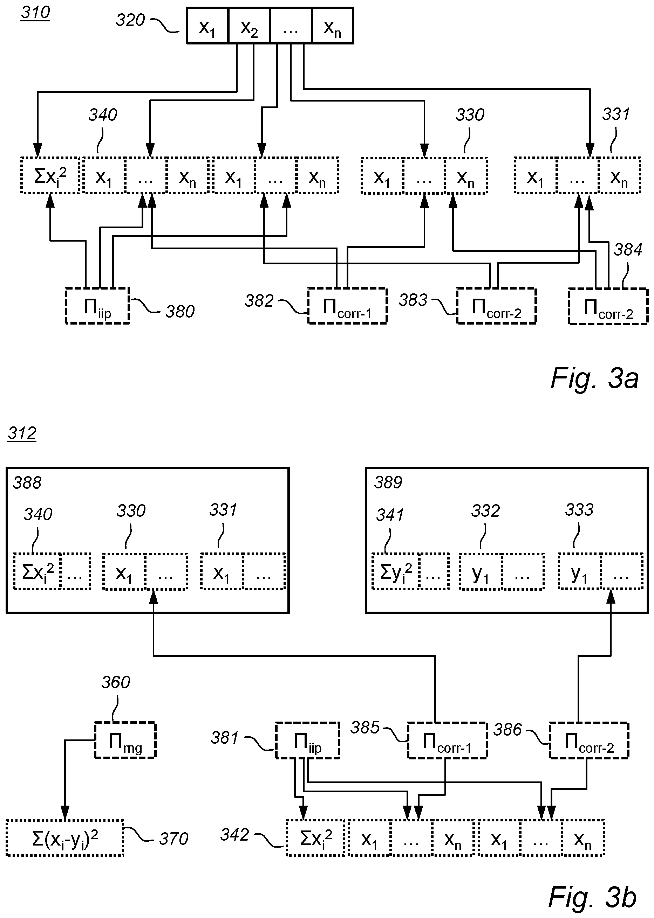

Fig. 3a schematically shows an example of an embodiment of a data providing device 310. The data providing device is based on data providing devices 110 and 210, and various design options described there, also apply here. For the purpose of explication, Fig. 3a shows various elements that may be stored by the devices at various stages of their operation.

In particular, shown is an input vector 320, and a determined commitment 330 to the input vector, e.g., based on those in Fig. 2. In this example, data providing device 310 also determines a second commitment 331 to the input vector 320, which can follow the same commitment scheme as commitment 330 but typically with different parameters, e.g., different sets of base elements for a generalized Pedersen commitment. The use of a second commitment 331 is optional, as will also be discussed below. If a second commitment 331 is used, data providing device 310 typically also determines, as part of the committed representation of the input vector 320, a correspondence proof 384 proving that the first and second commitments 330-331 commit to the same vector.

Also shown is a homomorphic commitment 340 to an inner product of the input vector 320 with itself. In this figure, the inner product commitment 340 further commits to two vectors both equal to the input vector 320. For example, the inner product commitment 340 can be a Pedersen commitment or another type of commitment that allows to commit to multiple values at the same time. Accordingly, if the number of elements of the input vector is $n$, then inner product commitment 340 can commit to at least $2n + 1$ values, namely, the values of the first vector equal to the input vector and of the second vector equal to the input vector, and their inner product.

As the inventors realized, interestingly, the use of such an inner product commitment 340 allows to prove that the inner product commitment 340 commits to the inner product of the input vector with itself, by proving, in correspondence proofs 382-383, that commitment 340 commits to the same vectors as respective commitment(s) to the input vector 330-331; and, in internal inner product proof 380, that commitment 340 commits to two vectors and their inner product. This can lead to more efficient (e.g., more efficiently verifiable and/or smaller) proofs than inner product commitments that do not commit to the input vector 320, especially because efficient constructions for internal inner product proof 380 can be used. Proofs 380, 382-384 may at least partially overlap, e.g., be based on the same challenge.

As a concrete example, when using generalized Pedersen commitments, commitments 330, 331, and 340 may be constructed as follows:

$$
X_1 = (\prod_1^n g_i{}^{x_i})\, l_1{}^{r_{x1}} \quad X_2 = (\prod_1^n h_i{}^{x_i})\, l_2{}^{r_{x2}} \quad \tilde{X} = (\prod_1^n g_i{}^{x_i} h_i{}^{x_i})\, u^{\langle \vec{x},\vec{x}\rangle} l_1{}^{r_{x1}} l_2{}^{r_{x2}} l_3{}^{r_{x3}}.
$$

Here, $\langle \cdot,\cdot \rangle$ denotes an inner product and $g_i$, $h_i$, $l_i$, $u$ ar generators. In this case, the representation of input vector 320 that is constructed by the data providing device 310 may comprise cryptographic proofs, e.g., zero-knowledge proofs, proving the following statement:

$$
PK\{\,(\vec{x}, r_{x1}, r_{x2}, r_{x3}): X_1 = \prod_1^n g_i{}^{x_i} l_1{}^{r_{x1}} \wedge X_2 = \prod_1^n h_i{}^{x_i} l_2{}^{r_{x2}} \wedge \tilde{X} = X_1 X_2 u^{\sum_1^n x_i{}^2} l_3{}^{r_{x3}} \wedge \tilde{X}
$$

$$
= \prod_1^n g_i{}^{x_i} \prod_1^n h_i{}^{x_i} u^{\langle \vec{x},\vec{x}\rangle} l_1{}^{r_{x1}} l_2{}^{r_{x2}} l_3{}^{r_{x3}}\}.
$$

In particular, the above statement may be proven by using a correspondence proof 384 to prove that commitments 330-331 commit to the same vector; by using correspondence proofs 382-383 to prove that commitment 340 commits to the same vectors as commitments 330-331; and by using internal inner product proof 380 to prove that commitment 380 commits to two vectors and their inner product.

Concerning correspondence proofs 382-384, various techniques are known in the art to prove correspondence. For example, for a correspondence proof 382-384, in the case of Pedersen-type commitments, it is known to perform such a proof in zero-knowledge based on the so-called "EQ-composition" generalization of the Schnorr proof, see, e.g., "Lecture Notes Cryptographic Protocols" by Berry Schoenmakers, version 1.5 (incorporated herein by reference). For Fujisaki-Okamoto commitments, a construction based on the proof that two commitments hide the same secret, as disclosed in F. Boudot, "Efficient Proofs That a Committed Number Lies in an Interval", can be used. Also generic techniques such as Pinocchio are possible.

Interestingly, correspondence proofs 382-383 can be made more efficient if the inner product commitment $\tilde{X}$, 340 comprises representations of the input vector 320 with respect to the same sets of base elements as commitments $X_1$, 330, and $X_2$, 331, for example, $\tilde{X} = X_1 X_2 u^{\sum_1^n x_i{}^2} l_3{}^{r_{x3}}$ or $\tilde{X} = X_1 X_2 u^{\sum_1^n x_i{}^2} l_3{}^{r_{x3}} l_1{}^{-r_{x1}} l_2{}^{-r_{x2}}$. In this case, correspondence proofs 382-383 can be implemented by proving knowledge of an opening of a difference commitment between the inner product commitment 380 and a combination of the input vector commitments 382-383, e.g., proving knowledge of $\alpha$, $\beta$ such that $\tilde{X}/X_1 X_2 = u^\alpha l_3{}^\beta$ or of $\alpha$, $\beta$, $\gamma$, $\delta$ such that $\tilde{X}/X_1 X_2 = u^\alpha l_1{}^\beta l_2{}^\gamma l_3{}^\delta$. Commitments 330 and 331 typically use different sets of base elements than each other so that homomorphically combining them does not mix the committed values. Interestingly, in terms of size and efficiency of constructing and verifying proofs, these proofs typically do not scale in the length of the input vector 320, leading to improved efficiency.

For the internal inner product proof 380, various techniques can be used including the generic Pinocchio techniques, but particularly beneficial embodiment can be obtained based on the inner-product argument from "Bulletproofs: Short Proofs for Confidential Transactions and More". This reference discloses a proof system that, given inner product commitment $P$ and generators $g$, $h$, $u$, proofs knowledge of vectors $a$, $b$ such that $P = g^a h^b \cdot u^{<a,b>}$. For example, this proof system can be used in combination with a deterministic inner product commitment 340, e.g.,

$$\tilde{X} = \prod_1^n g_i{}^{x_i} \prod_1^n h_i{}^{x_i} u^{\langle \vec{x}, \vec{x} \rangle}.$$ The proof system uses a reduction to a reduced statement comprising that a further commitment commits to an inner product of further vectors with smaller length than the and vectors *a* and *b*, and then proves the reduced statement, leading to an efficient proof in terms of proving/verification complexity and size, while not requiring a trusted set-up like the one in Pinocchio.

Interestingly, the inventors envisaged to improve the Bulletproofs inner-product argument in two ways. First, the inventors adapted the Bulletproofs proof to the setting where the inner product commitment is blinded, e.g., contains blinding terms $l_1{}^{rx1} l_2{}^{rx2} l_3{}^{rx3}$ or $l_3{}^{rx3}$. Second, the inventors adapted the Bulletproofs proof to reduce leakage about the witness *a, b*. Both improvements are separately applicable but their combination is especially desirable for allowing a proof with reduced leakage on hiding commitments.

In particular, the proof system may be adapted to the setting where the inner product commitment 340 comprises one or more blinding factors. To this end, the prover keeps track of the blinding factors. Also new blinding factors may be included in intermediate results sent by the prover to the verifier, reducing leakage due to the protocol itself. To this end, the prover can keep track of the blinding factors in commitments that are sent by the prover to the verifier. To further reduce leakage, the base case of the reduction may be replaced by performing a proof that has reduced leakage compared to revealing the witnesses, e.g., a zero-knowledge inner product proof such as that by Groth.

These measures are analogous to those applied to the Bootle proof as described with respect to Fig. 2, and can more broadly be applied to existing inner-product proofs that are based on reductions to a base case and based on exchanging commitments, thus reducing leakage and/or allowing their application to blinded commitments.

A detailed example of adaptation of the Bulletproofs proof system is now given including both improvements.

In this example, an inner product commitment 340 is used of the form $P = \prod_1^n g_i{}^{a_i} l_1{}^{r1} \prod_1^n h_i{}^{b_i} l_2{}^{r2} u^{\langle \vec{a}, \vec{b} \rangle} l_3{}^{r3}$.

Application to other ways of blinding the commitment 340, e.g., using $P = \prod_1^n g_i{}^{a_i} \prod_1^n h_i{}^{b_i} u^{\langle \vec{a}, \vec{b} \rangle} l_3{}^{r3}$, is analogous.

**Proof system for internal inner-product proof 380 based on Bulletproofs**

    **Prover's input:** (*g, h, u, P, a, b, r*1*, r*2*, r*3)
    **Verifier's input:** (*g, h, u, P*)
    **Output:** Verifier accepts or rejects

if *n=1*:

Prover can send commitment openings *a, b, r*1*, r*2*, r*3. As an alternative, to further reduce leakage, the prover can prove to the verifier that $PK\{(a, b, r1, r2, r3) : P = g^a l_1{}^{r1} g^b l_2{}^{r2} u^{a*b} l_3{}^{r3}\}$, e.g., by providing $g^a l_1{}^{r1}$, $g^b l_2{}^{r2}$, and $u^{a*b} l_3{}^{r3}$, and applying a product proof or length-1 inner product proof, e.g., based on the Groth proof system. If yes, Verifier accepts; otherwise it rejects

else:

Prover chooses *v,w* randomly such that: *v*1 + *w*1 = *r*1, *v*2 + *w*2 = *r*3, *v*3 + *w*3 = *r*3, computes:

$$n' = n/2$$

$$CL = \; < a[:n'], b[n':] >$$

$$CR = \; < a[n':], b[:n'] >$$

$$L = g_{[n':]}^{a[:n']} h_{[:n']}^{b[n':]} u^{CL} l_1{}^{v1} l_2{}^{v2} l_3{}^{v3}$$

$$R = g_{[:n']}^{a[n':]} h_{[n':]}^{b[:n']} u^{CR} l_1^{w1} l_2^{w2} l_3^{w3}$$

Prover $\to$ Verifier: *L, R*

Verifier $\to$ Prover: *x*, where *x* is a random number

**[0092]** Prover and Verifier compute:

$$g' = g_{[:n']}^{x^{-1}} g_{[n':]}^{x}$$

$$h' = h_{[:n']}^{x} h_{[n':]}^{x^{-1}}$$

$$P' = L^{x^2} P R^{x^{-2}}$$

Prover computes:

$$a' = a_{[:n']} \cdot x + a_{[n':]} \cdot x^{-1}$$

$$b' = b_{[:n']} \cdot x^{-1} + b_{[n':]} \cdot x$$

$$q1 = r1 + v1 \cdot x^2 + w1 \cdot x^{-2}$$

$$q2 = r2 + v2 \cdot x^2 + w2 \cdot x^{-2}$$

$$q3 = r3 + v3 \cdot x^2 + w3 \cdot x^{-2}$$

Recursively run protocol on input (*g', h', u, P'; a', b', q1, q2, q3*)

The committed representation of the input determined by data providing device 310 can comprise, for example, the commitment(s) 330, 331 to the vectors; the inner product commitment 340; and proofs 380, 382-384. As another example, instead of including an inner product commitment 340 that includes representations of a vector with respect to the same sets of base elements as a commitment 330, 331, it is also possible to include, as a commitment to the inner product, a homomorphically computed difference between the inner product commitment 340 and the vector(s) 330-331, e.g., to include $\tilde{X}/(X_1 X_2) = u^{\langle \vec{a}, \vec{b} \rangle} l_3^{r3}$ instead of $\prod_1^n g_i^{a_i} l_1^{r1} \prod_1^n h_i^{b_i} l_2^{r2} u^{\langle \vec{a}, \vec{b} \rangle} l_3^{r3}$.

Fig. 3b schematically shows an example of an embodiment of a cryptographic proving device 312. The proving is based on data providing devices 112 and 212, and various design options described there, also apply here. For the purpose of explication, Fig. 3b shows various elements that may be stored by the devices at various stages of their operation.

The cryptographic proving device 312 may be for constructing a cryptographic closeness proof between a first vector and a second vector. The cryptographic closeness proof may be with respect to first and second committed representations 388, 389 of the first and second vectors, respectively.

As shown in the figure, committed representations 388, 389 of the respective vectors may each comprise at least one commitment to the vector. Specifically, in this example, the committed representations 388, 389 each comprise at least two commitments to the vector: committed representation 388 comprises commitments 330, 331 and committed representation 389 comprises commitments 332, 333. This is not necessary, however: a committed representation can also comprise just one commitment to its respective vector. Committed representations 388, 389 may also comprise commitments to inner products 340, 341 of the first and second vectors with themselves. These can be inner products comprising each comprising two copies of the vectors themselves, as described with respect to Fig. 3a, but this is not needed.

The committed representations may be determined as discussed with respect to Fig. 2 or Fig. 3a.

Also shown in the figure is a homomorphic commitment 342 to an inner product of first and second vectors. Cryptographic proving device 312 may determine a cryptographic inner-product proof that this commitment 342 commits to an inner product of these first and second vectors. The inner-product proof may be with respect to the committed representations 338, 339, specifically, with respect to a commitment 330 to the first vector comprised in the first committed representation 338, and with respect to a commitment 331 to the second vector comprised in the second committed representation 339.

Interestingly, the inner-product commitment 342 shown in this figure, further commits to the first and second vectors, analogously to inner-product commitment 340 of Fig. 3a. Accordingly, also similarly to Fig. 3a, the inner-product proof can prove correctness of inner product commitment 341 by proving, in correspondence proofs 385, 386, that the commitment 342 commits to the same vectors as respective commitments 330, 333 of the committed representations 338, 339; and, in an internal correspondence proof 381, that commitment 381 commits to two vectors and their inner product. Proofs 381, 385, 386 may at least partially overlap, e.g., be based on the same challenge.

For correspondence proofs 385, 396, the same techniques are possible as for correspondence proofs 382, 383 of Fig. 3a. In particular, inner-product commitment 342 can comprise representations of the first and second vectors with respect to the same sets of base elements as in the commitments 330, 333 of the first and second committed representations, in which case particularly efficient correspondence proofs 385-386 are possible, e.g., by homomorphically computing a difference between the inner-product commitment 342 and the combination of the vector commitments 330, 333, and proving knowledge of an opening of that difference commitment, analogously to Fig. 3a.

In particular, to allow such efficient correspondence proofs to be constructed between any pair of committed representations in a set of committed representations 388-389, both committed representations can comprise a first commitment to a vector with respect to the same first set of base elements and a second commitment to the vector with respect to the same second set of base elements. For example, commitment 330 to the first vector and commitment 332 to the second vector, may be commitments with respect to the first set of base elements. Commitment 331 to the first vector and commitment 333 to the second vector, may be commitments with respect to the second set of base elements. This way, always a pair of commitments with respect to different sets of base elements can be chosen, while the amount of key material (e.g., public parameters of the system) needed for the different sets of base elements still remains limited.

Internal inner product proof 381 can be constructed similarly to internal inner product proof 380 of Fig. 3a; in particular, an improved Bulletproofs inner product proof, or more generally, an improved reduction-based zero-knowledge proof with blinded inputs, blinded intermediate values, and/or a leakage reducing base case, may be applied.

As detailed mathematical example is now presented of commitments and proofs determined by a cryptographic proving device 312. This detailed example illustrates the case where the cryptographic proving device also acts as a data provider for the second vector. As the skilled person understands, this example can be adapted to the case where the cryptographic proving device does not determine a committed representation, or determines both of them.

In this example, cryptographic proving device 312 determines commitments 332, 333 to the second vector; a commitment 341 to a self-inner product of the second vector with itself (which in this case also commits to two copies of the second vector); and a commitment 342 to the first vector, the second vector, and the inner product between the first and second vector, as follows:

$$Y_1 = \prod_1^n g_i{}^{y_i} l_1{}^{r_{y1}}, Y_2 = \prod_1^n h_i{}^{y_i} l_2{}^{r_{y2}}, \tilde{Y} = (\prod_1^n g_i{}^{y_i} h_i{}^{y_i}) u^{\langle \vec{y}, \vec{y} \rangle} l_1{}^{r_{y1}} l_2{}^{r_{y2}} l_3{}^{r_{y3}},$$

$$C = X_1 Y_2 u^{\langle \vec{x}, \vec{y} \rangle} l_3{}^{r_{y4}}.$$

Cryptographic proving device 312 in this example further determines a cryptographic inner-product proof (not shown) that commitment 341 to the self-inner product commits to an inner product of the second vector with itself, analogously to Fig. 3a; and a cryptographic inner-product proof that commitment 342 commits to an inner product of the first and second vectors committed to in vectors 330, 333, by proving the following statement:

$$PK\{(\vec{x},\vec{y},r_{y1},r_{y2},r_{y3},r_{y4}): Y_1 = \prod_1^n g_i{}^{y_i} l_1{}^{r_{y1}} \wedge Y_2 = \prod_1^n h_i{}^{y} l_2{}^{r_{y2}} \wedge \tilde{Y} = Y_1 Y_2 u^{\sum_1^n y_i{}^2} l_3{}^{r_{y3}} \wedge$$

$$\tilde{Y} = \prod_1^n g_i{}^{y_i} \prod_1^n h_i{}^{y_i} u^{\langle \vec{y},\vec{y}\rangle} l_1{}^{r_{y1}} l_2{}^{r_{y2}} l_3{}^{r_{y3}} \wedge C = X_1 Y_2 u^{\sum_1^n x_i y_i} l_3{}^{r_{y4}} \wedge$$

$$C = \prod_1^n g_i{}^{x_i} l_1{}^{r_{y1}} \prod_1^n h_i{}^{y_i} l_2{}^{r_{y2}} u^{\langle \vec{x},\vec{y}\rangle} l_3{}^{r_{y4}}\}$$

Specifically, to prove this statement, it may be proven that the self-inner-product $\tilde{Y}$ commits to the same vectors as commitments $Y_1$, 332 and $Y_2$, 333; and that commitment $\tilde{Y}$ commits to two vectors and their inner product, as also described with respect to Fig. 3a. To prove this statement, it may also be proven (e.g., by proofs 385-386) that commitment $C$, 342 commits to the same vectors $\vec{x}$, $\vec{y}$ as the commitments $X_1$, 330 and $Y_2$, 333 in the first and second committed representations 388 and 389, respectively; and that commitment $C$ commits to two vectors and their inner product (e.g., by proof 381).

Also shown in the figure is a cryptographic range proof 360 that may be determined by cryptographic proving device 312. Range proof 360 may prove that a distance commitment 370, committing to a squared Euclidean distance between the first and second vectors, commits to a value in a given range. In order to determine this proof, accordingly, cryptographic proving device 312 typically determines an opening to distance commitment 370 and determines range proof 360 based on this opening. Several known range proofs are discussed with respect to Fig. 2 and can also be used here. Accordingly, closeness between the first and second vectors may be proven.

It is noted that, in some embodiments, the cryptographic proving device 312 does not compute the distance commitment 370 itself, although it does typically compute the opening to the commitment. In other embodiments, however, the cryptographic proving device 312 does compute the distance commitment, e.g., in order to determine the challenge in a non-interactive zero-knowledge proof based on Fiat-Shamir or similar.

As also discussed with respect to Fig. 2, the distance commitment 370 may be homomorphically computable by a cryptographic verification device based on the inner-product commitments 340 of the first vector with itself; 341 of the second vector with itself; and 342 of the first and second vector.

If one or more of inner product commitments 340-342 additionally commit to the first and/or second vectors, then the homomorphic computation may comprise adding or removing of commitments to the first and second vectors, as appropriate. Specifically, if an inner product commitment 340-342 comprises a representation of a vector with respect to the same base elements as a commitment to a vector 330-333, then that vector commitment 330-333 may be subtracted from the inner product commitment as part of the homomorphic computation. This has the advantage that a distance commitment may be obtained in which no values with respect to those base elements are present, making it possible to use more efficient range proofs, in particular range proofs that do not depend on the length of the vectors.

For example, given vector commitments $Y_1 = \prod_1^n g_i{}^{y_i} l_1{}^{r_{y1}}$, 332 and $Y_2 = \prod_1^n h_i{}^{y_i} l_2{}^{r_{y2}}$, 333, and inner product commitment $\tilde{Y} = Y_1 Y_2 u^{\langle \vec{y},\vec{y}\rangle} l_3{}^{r_{y3}}$, the distance commitment may be computed as $\tilde{Y}/(Y_1 Y_2)$. If inner product commitments 340-342 each comprise the first and/or second vectors, then distance commitment 370 may be computed as:

$$D = \frac{\tilde{X}}{X_1 X_2} \frac{\tilde{Y}}{Y_1 Y_2} \frac{X_1^2 Y_2^2}{C^2} = \frac{X_1 Y_2 \tilde{X} \tilde{Y}}{X_2 Y_1 C^2}.$$

Accordingly, a distance commitment 370 of the form $u^d l_3{}^{r_x + r_y - 2r_c}$ may be obtained, with $r_x$, $r_y$, $r_c$ the randomness used for $\tilde{X}$, $\tilde{Y}$, $C$ respectively. Cryptographic proving device 312 can efficiently compute this commitment opening and determine the range proof 360.

The cryptographic closeness proof constructed by cryptographic proving device 312 can comprise, for example, the inner product commitment 342; and proofs 381, 385-386. As another example, instead of including an inner product commitment 342 that includes representations of the first and second vectors with respect to the same sets of base elements as commitments 330, 333, it is also possible to include a homomorphically computed difference between the inner product commitment 342 and the vector(s) 330,333, e.g., to include $C/(X_1 Y_2) = u^{\langle \vec{x}, \vec{y} \rangle} l_3^{r_{y4}}$ instead of

$$\prod_1^n g_i{}^{x_i} l_1{}^{r_{y1}} \prod_1^n h_i{}^{y_i} l_2{}^{r_{y2}} u^{\langle \vec{x}, \vec{y} \rangle} l_3{}^{r_{y4}}.$$

Using the presented techniques, a substantial improvement in performance may be achieved compared to existing techniques, e.g., as disclosed in "Privacy-preserving similarity evaluation and application to remote biometrics authentication". Generally, using inner-products commitment instead of individual product commitments improves storage efficiency, and allows for faster verification at least since the verifier can efficiently homomorphically compute a distance commitment. Using committed vector representations whose size is sublinear in the length of the vector further decreases storage requirements and allows to use inner-product proofs that are sublinear in the vector length. Accordingly, more efficient closeness proofs are obtained.

As a concrete example, when using the improved version of the Bulletproofs inner product proofs with reduced leakage, the following performance improvements are obtained. For determining a committed representation of an input vector, the number of commitments is reduced from $4n$ to $2log2(n) + 7$, and the number of exponentiations is reduced from $5n$ to $4n + 3log2(n) + 15$. For determining a committed representation of an input vector and proving closeness with respect to another input vector, the number of commitments is reduced from $6n$ to $4log2(n) + 10$, and the number of exponentiations is reduced from $7n$ to $4n + 6log2(n) + 17$. For homomorphically computing the distance commitment by the verifier, the number of multiplications is reduced from $4n$ to 8. The efficiency of the range proof on the distance commitment depends on the chosen range proof technique. For example, if the Groth range proof is used, approximately $4n/log2(n)$ exponentiations are needed in a multi-exponentiation, resulting in around $(2n + 4n/log(n))$ exponentiations. Other proofs can improve performance even more.

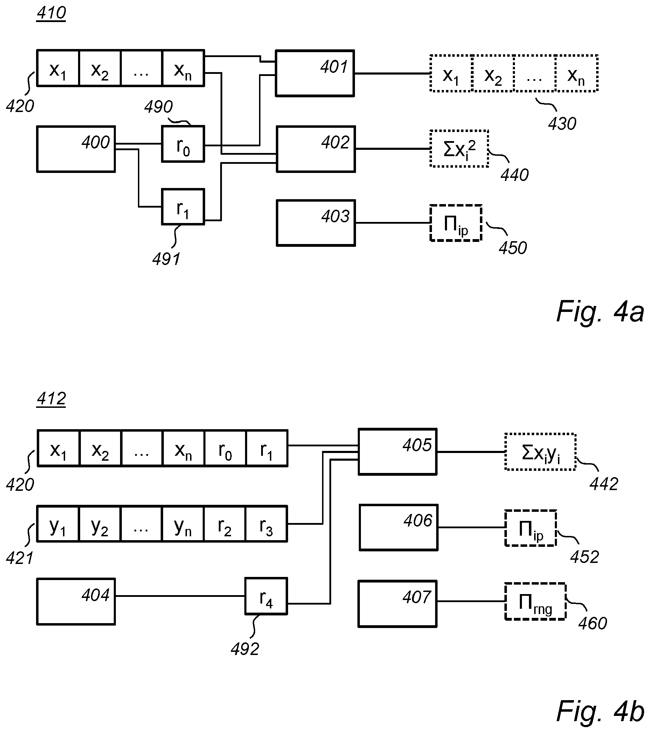

Fig. 4a schematically shows an example of an embodiment of a data providing device 410. Data providing device 410 may be for use in a cryptographic closeness proving system, e.g., system 100 or 200. For example, the device may be based on device 110 of Fig. 1, device 210 of Fig. 2, or device 310 of Fig. 3. Fig. 4a schematically shows functional units that may be functional units of a processor of the device (not shown separately). For example, the figure may be used as a blueprint of a possible functional organization of the processor. For example, the functional units shown, e.g. units 401-403, may be wholly or partially be implemented in computer instructions that are stored at device 410, e.g., in an electronic memory of device 410, and are executable by a microprocessor of device 410. In hybrid embodiments, functional units are implemented partially in hardware, e.g., as coprocessors, and partially in software stored and executed on device 410. For the purpose of explication, the figure also shows various elements that may be stored by the device at various stages of its operation.

Shown is a vector committing unit 401. Unit 401 may be configured to determine at least one commitment 430 to the input vector 420. The commitment may be a randomized commitment comprising randomness 490, which may be generated by a randomness generation unit 400.

Shown further is an inner product committing unit 402. Unit 402 may be configured to determine a homomorphic commitment 440 to an inner product of the input vector 420 with itself. Also commitment 440 can be randomized, for which randomness 491 generated by randomness generation unit 400 may be used.

Shown also is an inner product proving unit 403. Unit 403 may be configured to determine a cryptographic inner-product proof 450 that said commitment 440 commits to an inner product of the input vector 420 with itself. The proof is typically with respect to commitment(s) 430 to the input vector. The proof is typically determined based on the commitment openings of commitments 430, 440, e.g., vector 420 and randomness 490, 491. The proof can be non-interactive, or interactive, in which case also challenge information of a verifier may be used.

Fig. 4b schematically shows an example of an embodiment of a cryptographic proving device 412. Cryptographic proving device 412 may be for use in a cryptographic closeness proving system, e.g., system 100 or 200. For example, the device may be based on device 112 of Fig. 1, device 212 of Fig. 2, or device 312 of Fig. 3. Fig. 4b schematically shows functional units that may be functional units of a processor of the device (not shown separately). For example, the figure may be used as a blueprint of a possible functional organization of the processor. For example, the functional units shown, e.g. units 405-407, may be wholly or partially be implemented in computer instructions that are stored at device 412, e.g., in an electronic memory of device 412, and are executable by a microprocessor of device 412. In hybrid embodiments, functional units are implemented partially in hardware, e.g., as coprocessors, and partially in software stored and executed on device 412. For the purpose of explication, the figure also shows various elements that may be stored by the device at various stages of its operation.

Cryptographic proving device 412 may store openings 420, 421 of the commitments to the first and second vectors and of the commitments to the inner products of the first and second vectors with themselves. As illustrated, these openings typically comprise the vectors themselves and optionally the randomness used to commit to the vectors and inner products.

Shown is an inner product committing unit 405. Unit 405 may be configured to determine a homomorphic commitment 442 to an inner product of the first and second vectors 420, 421. The commitment 442 may be a randomized commitment, in which case randomness 492 generated by a randomness generation unit 404 may be used.

Shown is an inner product proving unit 406. Unit 406 may be configured to determine a cryptographic inner-product proof that said commitment 442 commits to an inner product of the first and second vectors 420, 421.

Shown is a range proving unit 407. Unit 407 may determine a cryptographic range proof 420 that a distance commitment (not shown) commits to a value in a given range. The distance commitment may commit to a squared Euclidean distance between the first and second vectors. The distance commitment may be homomorphically computable based on the commitments to the inner products of the first and second vector with themselves and with each other. Unit 407 typically determines the proof based on the commitment openings of the respective commitments, e.g., commitment openings 420, 421 and randomness 492 if it is used for inner product commitment 452. The proof can be non-interactive or interactive, in which case also challenge information of a verifier may be used to construct the proof.

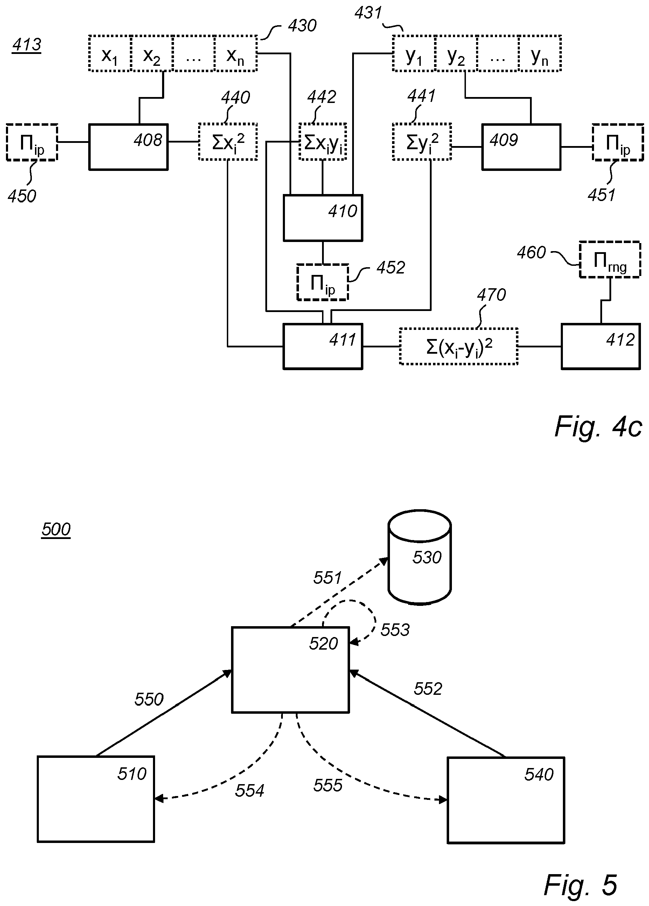

Fig. 4c schematically shows an example of an embodiment of a cryptographic verification device 413. Cryptographic verification device 413 may be for use in a cryptographic closeness proving system, e.g., system 100 or 200. For example, the device may be based on device 113 of Fig. 1 or device 213 of Fig. 2. Fig. 4c schematically shows functional units that may be functional units of a processor of the device (not shown separately). For example, the figure may be used as a blueprint of a possible functional organization of the processor. For example, the functional units shown, e.g. units 408-411, may be wholly or partially be implemented in computer instructions that are stored at device 413, e.g., in an electronic memory of device 413, and are executable by a microprocessor of device 413. In hybrid embodiments, functional units are implemented partially in hardware, e.g., as coprocessors, and partially in software stored and executed on device 413. For the purpose of explication, the figure also shows various elements that may be stored by the device at various stages of its operation.

Shown are inner product verifying units 408-409. Units 408-409 are for verifying correctness of first and second committed representations of the first and second vectors. To this end units 408, 409 may verify correctness of respective inner-product proofs 450, 451 comprised in said respective representations, thus verifying that respective inner-product commitments 440, 441 comprise inner products of the vectors committed to by commitments 430, 431 of the vectors themselves. Although single commitments 430, 431 to the respective vectors are shown in the figure, as also discussed with respect to Fig. 3a-3b, there can be multiple commitments to a vector in a committed representation.

Verifying correctness of the committed representations is optional, e.g., cryptographic verification device 413 may trust the data provider proving the committed representation or may even have constructed one or both of the committed representations itself.

Shown is a further inner product verifying unit 410. Unit 410 may verify an inner-product proof 452 proving that an inner-product commitment 442 of the cryptographic closeness proof indeed commits to an inner product of the first and second vectors, with respect to commitments 430, 431 of the committed representations of these vectors.

Also shown is a distance computing unit 411. Unit 411 may homomorphically determine a distance commitment 470 to a squared Euclidean distance between the first and second vectors based on the commitments 440, 441 to the inner products of the first and second vector with themselves and the commitment 450 of the first and second vectors with each other.

Also shown is a range proof verifying unit 412. Unit 412 may verify a cryptographic range proof 460 of the cryptographic closeness proof, proving that the distance commitment 470 commits to a value in a given range.

Fig. 5 schematically shows an example of an embodiment of a cryptographic closeness proving system 500. Cryptographic closeness proving system 500 here is a distributed ledger, for example a blockchain.

In this example, the system is used to help connect a requester 510 that is looking for data, e.g., genome streams, that matches certain (e.g., machine learning computable) properties, with a data provider 540 that has an ability to provide such data.

In this embodiment, a requester 510 publishes a request for data satisfying a given property, wherein the property comprises a minimum distance between a first vector and a second vector. The request can be in the form of a smart contract 520. Smart contract 520 may have access to a storage 530. This storage can for example store successful interactions, store public machine learning vector targets, reward funds (crypto), etc.

In the request, the first vector can be based on data of the requester 510 and the second vector can be based on data by the data provider 540 but this is not needed, e.g., the minimum distance can be part of a larger computation in which the first and/or second vectors are computed based on data of the requester 510 and/or the data provider 540 and/or public data.

For example, the first vector can be based on a set of parameters of a machine learning model of the requester 510, and the second vector can be based on a requested instance to this machine learning model. The requested property may be that a requested input instance matches the machine learning model. As another example, in the context of genome streams, the property can comprise a minimum or maximum distance between a reference genome and the requested genome.

A data provider 540 can provide a response 552 to the request. The response 552 can comprise a cryptographic closeness proof as described herein. Accordingly, the proof can contribute to proving suitability of the data of the data provider. Data provider 540 can reply directly to requester 510, but interestingly, data provider 540 can also provide response 552 as an input to the smart contract 520. Accordingly, proof verification 553 may take place in the distributed ledger as part of executing the smart contract 520. If the proof verifies, requester 510 may receive a notification. Data provider 555 can for example automatically receive a (crypto currency based) payment for providing the data.

Although use of the cryptographic closeness proofs as presented herein is preferred because of their superior efficiency, also the use of other cryptographic closeness proofs, including the existing system of Kikuchi, is envisaged.

With respect to Fig. 2 and 3a, improvements are described to reduction-based inner product proofs. Specifically, to reduce leakage and improve applicability in a privacy-preserving setting, inner-product proofs based on a public inner product are adapted to the setting where the inner-product is committed to, by having the prover provide blinded commitments to inner products to the verifier and keep track of the corresponding commitment openings though the reductions, and by blinding exchanged intermediate commitments. Instead or in addition, to further reduce leakage, a plain product or inner product check in the base case of a reduction of an inner product proof is replaced by a leakage-reducing proof, e.g., a zero-knowledge proof. These improvements can be applied to an inner product proof by Bootle et al., as described with respect to Fig. 2, and to the Bulletproofs inner product proof, as described with respect to Fig. 3a, but may be applicable more generally to similar inner product proofs for which the same measures can be applied. It is envisaged to use these improvements to inner product proofs also outside of the context of cryptographic closeness proofs, e.g., a cryptographic proving device is envisaged for constructing an inner product proof using either one or both of the described improvements, and a verifying device is envisaged for verifying such a proof.

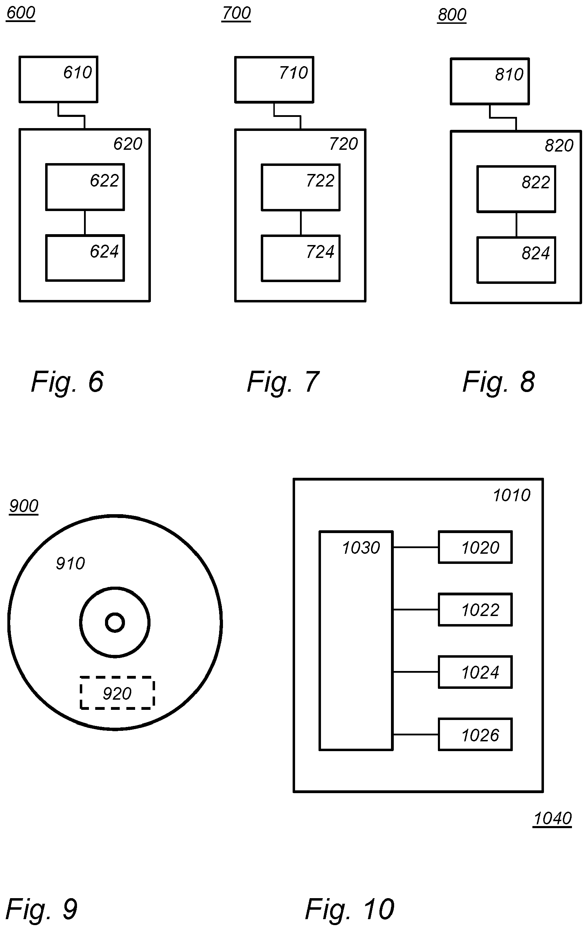

Fig. 6 schematically shows an example of an embodiment of a cryptographic proving method 600 of constructing a cryptographic closeness proof between a first vector and a second vector. The closeness proof may be with respect to first and second committed representations of the first and second vectors respectively. A committed representation of a vector may comprise a commitment to the vector and a homomorphic commitment to an inner product of the vector with itself. The method is typically computed-implemented.

Method 600 may comprise storing 610 openings of the commitments to the first and second vectors and of the commitments to the inner products of the first and second vectors with themselves; Method 600 may comprise constructing 620 the cryptographic closeness proof. The constructing 620 may comprise determining 622 a homomorphic commitment to an inner product of the first and second vectors, and a cryptographic inner-product proof that said commitment commits to an inner product of the first and second vectors. The constructing 620 may comprise determining 624 a cryptographic range proof that a distance commitment commits to a value in a given range, the distance commitment committing to a squared Euclidean distance between the first and second vectors, the distance commitment being homomorphically computable based on the commitments to the inner products of the first and second vector with themselves and with each other. The cryptographic closeness proof may comprise the homomorphic commitment to the inner product, the cryptographic inner-product proof, and the cryptographic range proof.

Fig. 7 schematically shows an example of an embodiment of a data providing method 700 of determining a committed representation of an input vector for use in a cryptographic closeness proof. The method is typically computed-implemented. Method 700 may comprise storing 710 the input vector. Method 700 may comprise determining 720 the committed representation of the input vector. Determining 700 may comprise determining 722 at least one commitment to the input vector. Determining 700 may comprise determining 724 a homomorphic commitment to an inner product of the input vector with itself, and a cryptographic inner-product proof that said commitment commits to an inner product of the input vector with itself. The committed representation may comprise the at least one commitment to the input vector, the homomorphic commitment to the inner product, and the cryptographic inner-product proof.

Fig. 8 schematically shows an example of an embodiment of a cryptographic verification method 800 of verifying a cryptographic closeness proof between a first vector and a second vector. The method is typically computed-implemented.

Method 800 may comprise storing 810 first and second committed representations of the first and second vectors respectively, and a cryptographic closeness proof constructed as described herein. Method 800 may comprise verifying 820 correctness of the cryptographic closeness proof with respect to the first and second committed representations. The verifying 820 may comprise at least homomorphically determining 822 a distance commitment to a squared Euclidean distance between the first and second vectors based on the commitments to the inner products of the first and second vector with themselves and of the first and second vectors with each other, and verifying 824 a cryptographic range proof that the distance commitment commits to a value in a given range.

Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, steps 622 and 624 of method 600 may be executed, at least partially, in parallel. Moreover, a given step may not have finished completely before a next step is started.

Embodiments of the methods may be executed using software, which comprises instructions for causing a processor system to perform a method 600, 700, or 800. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source, and object code such as partially compiled form, or in any other form suitable for use in the implementation of an embodiments of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

Fig. 9 shows a computer readable medium 900 having a writable part 910. Writable part 910 may comprise a computer program 920, the computer program 920 comprising instructions for causing a processor system to perform one or more of a data providing method, a cryptographic proving method, or a cryptographic verification method, according to an embodiment. The computer program 920 may be embodied on the computer readable medium 900 as physical marks or by means of magnetization of the computer readable medium 900. However, any other suitable embodiment is conceivable as well. Furthermore, it will be appreciated that, although the computer readable medium 900 is shown here as an optical disc, the computer readable medium 900 may be any suitable computer readable medium, such as a hard disk, solid state memory, flash memory, etc., and may be non-recordable or recordable. The computer program 920 comprises instructions for causing a processor system to perform one or said methods. Instead of or in addition to computer program 920, the computer readable medium may comprise a committed representation of an input vector and/or a cryptographic closeness proof with respect to first and second committed representations of first and second vectors respectively.

Fig. 10 shows in a schematic representation of a processor system 1040 according to an embodiment. The processor system comprises one or more integrated circuits 1010. The architecture of the one or more integrated circuits 1910 is schematically shown in Figure 10. Circuit 1010 comprises a processing unit 1020, e.g., a CPU, for running computer program components to execute a method according to an embodiment and/or implement its modules or units. Circuit 1010 comprises a memory 1022 for storing programming code, data, etc. Part of memory 1022 may be read-only. Circuit 1010 may comprise a communication element 1026, e.g., an antenna, connectors or both, and the like. Circuit 1010 may comprise a dedicated integrated circuit 1024 for performing part or all of the processing defined in the method. Processor 1020, memory 1022, dedicated IC 1024 and communication element 926 may be connected to each other via an interconnect 1030, say a bus. The processor system 1010 may be arranged for contact and/or contact-less communication, using an antenna and/or connectors, respectively.

For example, in an embodiment, processor system 1040, e.g., the issuer device, selector device, or receiver device, may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

Typically, the devices each comprise a microprocessor which executes appropriate software stored at the devices; for example, that software may have been downloaded and/or stored in a corresponding memory, e.g., a volatile memory such as RAM or a non-volatile memory such as Flash. Alternatively, the devices may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL etc.

In an embodiment, the data providing device comprises a vector committing circuit, an inner product committing circuit, and an inner product proving circuit. In an embodiment, the cryptographic proving device comprises an inner product committing circuit, an inner product proving circuit, and a range proving circuit. In an embodiment, the cryptographic verification device comprises an inner product verifying circuit, a distance computing circuit, and a range proof verifying circuit. The devices may comprise additional circuits, in particular randomness generation circuits or additional inner product verifying circuits. The circuits implement the corresponding units described herein. The circuits may be a processor circuit and storage circuit, the processor circuit executing instructions represented electronically in the storage circuits. A processor circuit may be implemented in a distributed fashion, e.g., as multiple sub-processor circuits. Part of the storage may be read-only. The circuits may also be, FPGA, ASIC or the like. A storage may be distributed over multiple distributed sub-storages. Part or all of the memory may be an electronic memory, magnetic memory, etc. For example, the storage may have volatile and a non-volatile part.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A cryptographic proving device (112) for constructing a cryptographic closeness proof between a first vector and a second vector, the closeness proof being with respect to first and second committed representations of the first and second vectors respectively, a committed representation of a vector comprising a commitment to the vector and a homomorphic commitment to an inner product of the vector with itself, the device comprising:

   - a memory (132) configured to store openings of the commitments to the first and second vectors and of the commitments to the inner products of the first and second vectors with themselves;
   - a processor (142) configured to construct the cryptographic closeness proof by:

      - determining a homomorphic commitment to an inner product of the first and second vectors; and a cryptographic inner-product proof, proving that said commitment commits to the inner product of the first and second vectors;
      - determining a cryptographic range proof proving that a distance commitment commits to a value in a given range, the distance commitment committing to a squared Euclidean distance between the first and second vectors, the distance commitment being homomorphically computable based on the commitments to the inner products of the first and second vector with themselves and with each other,

   wherein the cryptographic closeness proof comprises the homomorphic commitment to the inner product, the cryptographic inner-product proof, and the cryptographic range proof.

2. The cryptographic proving device (112) of claim 1, wherein the commitment to the inner product of the first and second vectors further commits to the first and second vectors, the inner-product proof proving that said commitment commits to two vectors and their inner product.

3. The cryptographic proving device (112) of claim 2, wherein the commitment to the first vector is with respect to a first set of base elements and the commitment to the second vector is with respect to a second set of base elements, the commitment to the inner product committing to the first vector with respect to the first set of base elements and to the second vector with respect to the second set of base elements.

4. The cryptographic proving device (112) of claim 3, wherein the first and second committed representations each comprise a first commitment to the respective vectors with respect to the first set of base elements and a second commitment to the respective vectors with respect to the second set of base elements.

5. The cryptographic proving device (112) of any one of the preceding claims, wherein the first vector is based on a set of parameters of a machine learning model and the second vector is based on an input instance to said machine learning model, the cryptographic closeness proof being for use in proving that the input instance matches the machine learning model.

6. A cryptographic proving method (600) of constructing a cryptographic closeness proof between a first vector and a second vector, the closeness proof being with respect to first and second committed representations of the first and second vectors respectively, a committed representation of a vector comprising a commitment to the vector and a homomorphic commitment to an inner product of the vector with itself, the method comprising:

- storing (610) openings of the commitments to the first and second vectors and of the commitments to the inner products of the first and second vectors with themselves;
- constructing (620) the cryptographic closeness proof by:

- determining (622) a homomorphic commitment to an inner product of the first and second vectors; and the cryptographic inner-product proof, proving that said commitment commits to an inner product of the first and second vectors;
- determining (624) a cryptographic range proof, proving that a distance commitment commits to a value in a given range, the distance commitment committing to a squared Euclidean distance between the first and second vectors, the distance commitment being homomorphically computable based on the commitments to the inner products of the first and second vector with themselves and with each other,

wherein the cryptographic closeness proof comprises the homomorphic commitment to the inner product, the cryptographic inner-product proof, and the cryptographic range proof.

7. A data providing device (110) for determining a committed representation of an input vector for use in a cryptographic closeness proof, the device comprising:

- a memory (130) configured to store the input vector;
- a processor (140) configured to determine the committed representation of the input vector by:

- determining at least one commitment to the input vector;
- determining a homomorphic commitment to an inner product of the input vector with itself, and a cryptographic inner-product proof that said commitment commits to an inner product of the input vector with itself,

wherein the committed representation comprises the at least one commitment to the input vector, the homomorphic commitment to the inner product, and the cryptographic inner-product proof.

8. The data providing device (110) of claim 8, wherein the processor is configured to determine a first commitment to the input vector with respect to a first set of base elements; a second commitment to the input vector with respect to a second set of base elements; and a cryptographic correspondence proof that the first and second commitments commit to the same vector.

9. The data providing device (110) of claim 7 or 8, wherein the commitment to the inner product further commits to two vectors both equal to the input vector, the inner-product proof proving that said commitment commits to two vectors and their inner product.

10. A data providing method (700) of determining a committed representation of an input vector for use in a cryptographic closeness proof, the method comprising:

- storing (710) the input vector;
- determining (720) the committed representation of the input vector by:

- determining (722) at least one commitment to the input vector;
- determining (724) a homomorphic commitment to an inner product of the input vector with itself, and a cryptographic inner-product proof that said commitment commits to an inner product of the input vector with itself,

wherein the committed representation comprises the at last one commitment to the input vector, the homomorphic commitment to the inner product, and the cryptographic inner-product proof.

11. A cryptographic verification device (113) for verifying a cryptographic closeness proof between a first vector and a second vector, the device comprising:

- a memory (133) configured to store first and second committed representations of the first and second vectors respectively, and a cryptographic closeness proof constructed according to the method of claim 6; and
- a processor (143) configured to verify correctness of the cryptographic closeness proof with respect to the first and second committed representations, comprising at least homomorphically determining a distance commitment to a squared Euclidean distance between the first and second vectors based on the commitments to the inner products of the first and second vector with themselves and of the first and second vectors with each other, and verifying a cryptographic range proof that the distance commitment commits to a value in a given range.

12. The cryptographic verification device (113) of claim 11, wherein the processor is further configured to verify correctness of the first and second committed representations, comprising at least verifying correctness of inner-product proofs comprised in said respective representations.

13. A cryptographic verification method (800) of verifying a cryptographic closeness proof between a first vector and a second vector, the method comprising:

   - storing (810) first and second committed representations of the first and second vectors respectively, and a cryptographic closeness proof constructed according to the method of claim 8; and
   - verifying (820) correctness of the cryptographic closeness proof with respect to the first and second committed representations, comprising at least homomorphically determining (822) a distance commitment to a squared Euclidean distance between the first and second vectors based on the commitments to the inner products of the first and second vector with themselves and of the first and second vectors with each other, and verifying (824) a cryptographic range proof that the distance commitment commits to a value in a given range.

14. A cryptographic closeness proving system (100) comprising:

   - one or more data providing devices according to claim 7;
   - a cryptographic proving device according to claim 1; and
   - a cryptographic verification device according to claim 11.

15. A computer readable storage medium (900) comprising transitory or non-transitory data (920) representing one or more of:

   - instructions to cause a processor system to perform the method according to claim 6;
   - instructions to cause a processor system to perform the method according to claim 10;
   - instructions to cause a processor system to perform the method according to claim 13;
   - a committed representation of an input vector, comprising: at least one commitment to the input vector; a homomorphic commitment to an inner product of the input vector with itself; and a cryptographic inner-product proof that said commitment commits to an inner product of the input vector with itself;
   - a cryptographic closeness proof with respect to first and second committed representations of first and second vectors respectively, a committed representation of a vector comprising a commitment to the vector and a homomorphic commitment to an inner product of the vector with itself, the cryptographic closeness proof comprising:

      - a homomorphic commitment to an inner product of the first and second vectors;
      - a cryptographic inner-product proof, proving that said commitment commits to an inner product of the first and second vectors; and
      - a cryptographic range proof, proving that a distance commitment commits to a value in a given range; the distance commitment committing to a squared Euclidean distance between the first and second vectors; the distance commitment being homomorphically computable based on the commitments to the inner products of the first and second vector with themselves and with each other.

100

Fig. 1

Fig. 2

Fig. 3a

Fig. 3b

_410_

Fig. 4a

_412_

Fig. 4b

28

*Fig. 4c*

*Fig. 5*

600

610

620

622

624

Fig. 6

700

710

720

722

724

Fig. 7

800

810

820

822

824

Fig. 8

900

910

920

Fig. 9

1010

1030

1020

1022

1024

1026

1040

Fig. 10

Europäisches
Patentamt

European
Patent Office

Office européen
des brevets

# EUROPEAN SEARCH REPORT

Application Number

EP 20 18 0991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | HIROAKI KIKUCHI ET AL: "Privacy-preserving similarity evaluation and application to remote biometrics authentication", SOFT COMPUTING ; A FUSION OF FOUNDATIONS, METHODOLOGIES AND APPLICATIONS, SPRINGER, BERLIN, DE, vol. 14, no. 5, 4 June 2009 (2009-06-04), pages 529-536, XP019782385, ISSN: 1433-7479 | 1-15 | INV. H04L9/30 |
| Y | * Protocol Private-Euclid; figure 2 * | 1-15 | |
| X | BUNZ BENEDIKT ET AL: "Bulletproofs: Short Proofs for Confidential Transactions and More", 2018 IEEE SYMPOSIUM ON SECURITY AND PRIVACY (SP), IEEE, 20 May 2018 (2018-05-20), pages 315-334, XP033377741, DOI: 10.1109/SP.2018.00020 [retrieved on 2018-07-23] | 7-9 | |
| Y | * sections 3 and 4; protocols 1 and 2 * | 1-15 | TECHNICAL FIELDS SEARCHED (IPC) H04L |

The present search report has been drawn up for all claims

| Place of search | Date of completion of the search | Examiner |
|---|---|---|
| Munich | 12 October 2020 | Billet, Olivier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4995082 A

**Non-patent literature cited in the description**

- **H. KIKUCHI et al.** Privacy-preserving similarity evaluation and application to remote biometrics authentication. *Soft Computing,* 2010, vol. 14, 529-536
- **J. GROTH.** Linear Algebra with Sub-linear Zero-Knowledge Arguments. *Proceedings CRYPTO,* 2009
- **J. BOOTLE et al.** Efficient Zero-Knowledge Arguments for Arithmetic Circuits in the Discrete Log Setting. *Proceedings EUROCRYPT,* 2016
- **B. BÜNZ et al.** Bulletproofs: Short Proofs for Confidential Transactions and More. *Proceedings S&P,* 2018
- **J. CAMENISCH et al.** Efficient protocols for set membership and range proofs. *Proceedings ASIACRYPT,* 2008
- **F. BOUDOT.** Efficient Proofs that a Committed Number Lies in an Interval. *Proceedings EUROCRYPT,* 2000
- **B. PARNO et al.** Pinocchio: Nearly Practical Verifiable Computation. *Proceedings S&P,* 2013